# EUROPEAN PATENT APPLICATION

(11) **EP 4 675 488 A1**
(43) Date of publication of application: **07.01.2026**
(21) Application number: 25187471.5
(22) Date of filing: 04.07.2025
(51) Int. Cl.: G06F 30/18, G06T 19/00, G06T 19/20, G06F 113/16

(54) **UPDATE FLATTENED ROUTE FOR SPLIT AND MERGE ROUTE MODIFICATIONS IN 3D ROUTE DESIGN**

(30) Priority: 04.07.2024 IN 202411051267
(71) Applicant: Dassault Systemes Solidworks Corporation, Waltham, MA 02451 (US)
(72) Inventor: Zolekar, Vivek, Waltham, 02451 (US); Nikam, Aditya, Waltham, 02451 (US); Patil, Satyajeet, Waltham, 02451 (US); Shirkey, Nitin, Waltham, 02451 (US)
(74) Representative: Bandpay & Greuter

(57) **Abstract**

A computer-based method includes generating, in a virtual two-dimensional viewing environment, a flattened, two-dimensional visual representation of an initial three-dimensional model of a wiring harness. The flattened representation has an initial visual layout in the virtual two-dimensional viewing environment. The method includes subsequently modifying the initial three-dimensional model in a virtual three-dimensional modeling environment to generate a modified three-dimensional model. The modifications include splitting a route segment or merging two route segments. The method includes generating, in the virtual two-dimensional viewing environment, a flattened, two-dimensional visual representation of the modified three-dimensional model, that visually represents either the split or the merge, and otherwise has the same visual layout as the flattened, two-dimensional representation of the initial three-dimensional model.

## Description

### CROSS-REFERENCE TO RELATED APPLICATION(S)

This application claims the benefit of priority to Indian Patent Application No. 202411051267 entitled Update Flattened Route for Split and Merge Route Modifications in 3D Route design, which was filed on July 4, 2024. The disclosure of the prior application is incorporated by reference herein in its entirety.

### FIELD OF THE INVENTION

This disclosure relates to the field of computer aided design (CAD) of real world objects, such as wiring harnesses or the like and, more specifically, computer-implemented systems and techniques for updating a flattened, two-dimensional version of a model in view of changes (e.g., splitting or merging in route segments) to the model made in a virtual three-dimensional modeling environment.

### BACKGROUND

Wiring harness design involves planning, creating, and documenting the arrangement of wires, cables, connectors, etc. within a system to deliver electrical power and data signals safely and effectively. It generally involves creating a physical layout, selecting appropriate components, and ensuring the harness integrates seamlessly with its environment and other nearby systems and components. As discussed herein, the design process may include creating a three-dimensional model of the wiring harness in a virtual three-dimensional modeling environment. A formboard is a digital representation of a wiring harness, typically derived from a model of the wiring harness, that may be used by a manufacture to manufacture the modeled wiring harness.

The process of designing such models and generating formboard drawings (or other digital representations for manufacturing) from the models has proven complex, cumbersome, inefficient, costly, and prone to errors. Improvements would be helpful.

### SUMMARY OF THE INVENTION

In one aspect, a computer-based method includes generating, in a virtual two-dimensional viewing environment, a flattened, two-dimensional visual representation of an initial three-dimensional model of a wiring harness. The flattened representation has an initial visual layout in the virtual two-dimensional viewing environment. The method includes subsequently modifying the initial three-dimensional model in a virtual three-dimensional modeling environment to generate a modified three-dimensional model. The modifications include splitting a route segment or merging two route segments. The method includes generating, in the virtual two-dimensional viewing environment, a flattened, two-dimensional visual representation of the modified three-dimensional model, that visually represents either the split or the merge, and otherwise has the same visual layout as the flattened, two-dimensional representation of the initial three-dimensional model.

In another aspect, a system is disclosed that includes a computer with a computer processor, and computer-based memory operatively coupled to the computer processor. The computer-based memory stores computer-readable instructions that, when executed by the computer processor, cause the computer system to perform a process comprising generating, in a virtual two-dimensional viewing environment, a flattened, two-dimensional visual representation of an initial three-dimensional model of a wiring harness. The flattened representation has an initial visual layout in the virtual two-dimensional viewing environment. The method includes subsequently modifying the initial three-dimensional model in a virtual three-dimensional modeling environment to generate a modified three-dimensional model. The modifications include splitting a route segment or merging two route segments. The method includes generating, in the virtual two-dimensional viewing environment, a flattened, two-dimensional visual representation of the modified three-dimensional model, that visually represents either the split or the merge, and otherwise has the same visual layout as the flattened, two-dimensional representation of the initial three-dimensional model.

In yet another aspect, a non-transitory computer readable medium is disclosed that has stored thereon computer-readable instructions that, when executed by a computer-based processor, cause the computer-based processor to perform the above-method ; in example, the method comprises generating, in a virtual two-dimensional viewing environment, a flattened, two-dimensional visual representation of an initial three-dimensional model of a wiring harness. The flattened representation has an initial visual layout in the virtual two-dimensional viewing environment. The method includes subsequently modifying the initial three-dimensional model in a virtual three-dimensional modeling environment to generate a modified three-dimensional model. The modifications include splitting a route segment or merging two route segments. The method includes generating, in the virtual two-dimensional viewing environment, a flattened, two-dimensional visual representation of the modified three-dimensional model, that visually represents either the split or the merge, and otherwise has the same visual layout as the flattened, two-dimensional representation of the initial three-dimensional model.

**In** still another aspect, there is provided a computer program product configured to be operable to cause a computer to perform a process comprising generating, in a virtual two-dimensional viewing environment, a flattened, two-dimensional visual representation of an initial three-dimensional model of a wiring harness. The flattened representation has an initial visual layout in the virtual two-dimensional viewing environment. The method includes subsequently modifying the initial three-dimensional model in a virtual three-dimensional modeling environment to generate a modified three-dimensional model. The modifications include splitting a route segment or merging two route segments. The method includes generating, in the virtual two-dimensional viewing environment, a flattened, two-dimensional visual representation of the modified three-dimensional model, that visually represents either the split or the merge, and otherwise has the same visual layout as the flattened, two-dimensional representation of the initial three-dimensional model.

In some implementations, one or more of the following advantages are present.

For example, in various implementations, changes made to a route segment on a three-dimensional model of a wiring harness may be reciprocated (e.g., incorporated) into its flattened configuration while preserving and not significantly disturbing the visual layout of (and any previous edits made to the visual layout of) a prior iteration of the flattened configuration (e.g., in a formboard drawing). Thus, certain limitations in prior systems may be overcome by maintaining the previous edits in the 2D flattened route. Typical implementations may improve the accuracy of the update mechanism on the 2D flattening side whenever there are changes done on the 3D Route assembly. This may result in improved readability and cleanliness of a flatten harness visual layout, regardless of iterative model updates. Various implementations of the systems and techniques disclosed herein may enable improved design lead-time before finalizing electrical harness flattened formboard designs.

Other features and advantages will be apparent from the description and drawings, and from the claims.

### BRIEF DESCRIPTION OF THE DRAWINGS

FIG. 1 shows a series of images with varying views of a relatively simple electrical wiring harness assembly design in a computer-implemented environment.
FIG. 2 shows an example of a change being made to a three-dimensional wiring harness model and how that change in the three-dimensional wiring harness model may affect the appearance of the corresponding two-dimensional version of the model when the changed version of the three-dimensional wiring harness model is flattened.
FIG. 3 is a schematic representation of an exemplary computer 100 configured to implement the systems and functionalities disclosed herein.
FIG. 4 is a detailed visual representation of the three-dimensional wiring harness model from the *Electrical Harness Assembly 3D* image in FIG. 1.
FIG. 5 is a visual representation of the flattened two-dimensional version of the wiring harness model from the *Iteration 4: Added Bend* image in FIG. 1.
FIGS. 6 and 8 are flowcharts showing an implementation of a computer-implemented process.
FIG. 7 is a schematic representation of an electrical wiring harness model and flattened version thereof in various states.
FIGS. 9, 11, and 12 are flowcharts showing an implementation of a computer-implemented process.
FIG. 10 is a schematic representation of an electrical wiring harness model and flattened version thereof in various states.
FIG. 13 is a schematic representation of an electrical wiring harness model and flattened version thereof in various states.

Like reference characters refer to like elements.

### DETAILED DESCRIPTION

This document uses a variety of terminology to describe its inventive concepts. The terminology should be given its ordinary meaning and, unless otherwise indicated, may be understood as having meanings that are consistent with what follows.

For example, in general, the phrase, "computer-aided design" (or CAD) refers to the use of computers (or workstations) to aid in the creation, modification, analysis, or optimization of a design. A "design" refers to a plan or specification (e.g., drawing), typically stored in computer-based memory, for an object or system, including construction details for that object or system. The SOLIDWORKS^{®} computer program, available from Dassault Systèmes SolidWorks Corporation, the applicant of the current application, is one example of a CAD software program. As used herein, the phrase "computer-aided design" or CAD should be construed broadly to include any computer software, device, or system that incorporates or can incorporate electrical harness assembly design flattening capabilities.

The phrase "wiring harness" (or "electrical harness," "cable harness," "wire harness," "cable assembly," "wiring assembly," or the like refers to an assembly of electrical cables or wires that can transmit electrical signals and/or power. The cables or wires may be bound together, along at least certain extents of the electrical harness, by a durable material such as rubber, vinyl, electrical tape, conduit a weave of extruded string, or a combination thereof.

The term "model" or the phrase "three-dimensional model" generally refer to a digital or virtual representation of a physical, real world object (such as a wiring harness) or system. Typically, models, including three-dimensional models, are created using computer-aided design (CAD) software. A typical model will include information about the object's geometry, dimensions, and potentially other information, such as material and/or material characteristics. For example, in an exemplary implementation, a model may include a digital or virtual representation of an associated real world object (e.g., wiring harness), including details about route segments that make up the wiring harness. Such details may include, for each wiring harness, one or more data structures stored in computer memory and representing / identifying route segment names, lengths, start points, end points, associated sketch segments, etc. In a typical implementation, a computer, executing the CAD software, may display a three-dimensional, scaled visualization of the object or system being designed, and provide that user with interface elements that facilitate model creation and/or editing.

The phrase "flattening" refers to a computer-implemented process whereby a virtual three-dimensional (3D) model of an object (e.g., a wiring harness) is converted into a flattened two-dimensional (2D) version of the model in a virtual environment. "Flattening" a model of a "wiring harness" refers to a computer-implemented process by which a 3D model of the wiring harness, or a portion thereof, is converted into a 2D version of the wiring harness model in a virtual (e.g., CAD) environment. In a typical implementation, the length of each route segment in the 3D wiring harness model, for example, is brought into the 2D version of the 3D model during the flattening process.

A "route segment" refers to a portion of a wiring harness that extends, typically, between two distinct junction points of the wiring harness. A route segment in a may include one or more sketch segments. A "sketch segment" may include a spline, a line, an arc, or a curve. A route segment may be represented in computer memory by data structure(s) that define one or more route properties. A "junction point" is a point on a wiring harness where multiple route segments merge, or where multiple individual wires merge into a bound section of the wiring harness.

The phrase "visual layout" typically refers to the spatial configuration or arrangement of the visual elements in a flattened two-dimensional (2D) version of a 3D model on a two-dimensional plane (e.g., a virtual two-dimensional environment or a real world two-dimensional substrate). Although the visual representation of the flattened two-dimensional (2D) version of the 3D model shows the physical details of the 3D model, the concept of a "visual layout" of the flattened two-dimensional (2D) version of the 3D model should be considered a concept that is distinct from the 3D model itself. As discussed herein, when a 3D model is first flattened, the resulting flattened, 2D version of the model may have a default visual layout. That default visual layout may be editable by a designer (e.g., by adding or removing bends, modifying angles, straightening lines, adjusting fanouts, flipping route segments, etc.). Any changes to the visual layout of the flattened, 2D version of the model do not affect the 3D model itself.

The phrase "processor" or the like refers to any one or more computer-based processing devices. A computer-based processing device is a physical component that can perform computer functionalities by executing computer-readable instructions stored in memory.

The phrase "memory" or the like refers to any one or more computer-based memory devices. A computer-based memory device is a physical component that can store computer-readable instructions that, when executed by a processor, results in the processor performing associated computer functionalities.

### Technical Disclosure

This disclosure relates to the design and manufacturing of certain types of real world objects, such as electrical wiring harness assemblies ("wiring harnesses") or the like, where the design process occurs in a computer-implemented virtual design environment. Wiring harnesses may be used in a wide variety of different industries and applications including, for example, in automobiles, aircrafts, ships, trains, industrial machinery, consumer electronics and appliances, medical devices, the military and defense industry, etc. Typically, a wiring harness is an assembly of electrical wires or cables that can transmit signals or electrical power. The wires or cables may be bound together (e.g., by a durable material such as rubber, vinyl, etc.). The process of designing a wiring harness typically includes both electrical and mechanical design. The electrical design portion of this process typically focuses on ensuring that the electrical characteristics of the wiring harness are sufficient to satisfy the electrical requirements of the wiring harness. The mechanical design portion of the process typically focuses on ensuring that the physical parameters of the wiring harness are adequate to satisfy the physical requirements of the wiring harness. The mechanical design portion of the process typically involves specifying an intended physical configuration of the wiring harness including, for example, path definitions, route segment start points, route segment end points, route segment lengths, etc.

Typically, the design process is an iterative one, with design changes being made in response to new realizations and/or new information being learned about the electrical or mechanical requirements for the wiring harness being designed. Designers typically use computer software to facilitate wiring harness design. One example of software that traditionally has been used in connection with designing wiring harnesses is SOLIDWORKS^{®} computer aided design software, available from Dassault Systemes Solidworks Corporation, particularly incorporating a Routing^{™} add-in, which also is available from Dassault Systemes Solidworks Corporation. Computer systems, executing such software, may be adapted in accordance with the systems and processes disclosed herein, to enhance the effectiveness and efficiency of the design process when using such an adapted system.

In a typical implementation, such a system may provide a designer with access to a virtual three-dimensional modeling environment, where the designer can create and modify a three-dimensional model that represents the physical configuration of a wiring harness. The system also typically provides the designer with access to a functionality that flattens the three-dimensional model to produce a flattened, virtual two-dimensional representation of the wiring harness based on the three-dimensional model. This flattening functionality is desirable because it is generally easier to understand what needs to be manufactured when looking at a flattened, two-dimensional image of a wiring harness, as compared to looking at a three-dimensional model of the wiring harness. The flattening functionality, therefore, gives the designer an easy and convenient way to produce the types of flattened two-dimensional drawings that manufacturers prefer from the three-dimensional models that the designer has created in the three-dimensional environment, which tends to be the preferred environment for designing the three-dimensional physical configuration of a wiring harness. In a typical implementation, the flattening functionality is accessible (e.g., as a button or other user-selectable visual element) on a graphical user interface of the associated CAD program. Activating the flattening functionality typically causes the flattening procedure to occur automatically (i.e., without requiring further input from the user).

Once flattened, the visual layout of the resulting two-dimensional representation of the wiring harness may be edited (e.g., by adding or removing bends, modifying angles, straightening lines, adjusting fanouts, flipping route segments, etc.). Such editing may be needed and/or desired in order to present an image of the two-dimensional visual representation that fits in the space allotted and that is visually most sensible and usable. After a three-dimensional model of a wiring harness has been flattened and the resulting two-dimensional visual representation of the harness optionally edited, the designer may 1) provide a printed or digital version of the flattened two-dimensional representation of the harness to a manufacturer to manufacture a real world version of the wiring harness represented in the flattened two-dimensional representation, or 2) return to the three-dimensional environment, where the latest three-dimensional model of the wiring harness will be displayed and presented, for further potential modifications. In a typical design process, the designer may iteratively toggle back and forth between the two environments (i.e., the three-dimensional modeling environment and the two-dimensional environment) making changes to the three-dimensional model in the three-dimensional modeling environment and/or making changes to the visual layout of the flattened two-dimensional representation of the three-dimensional model in the two-dimensional environment. It is generally desirable that any changes made during such an iterative design process, particularly any changes made to the visual layout of the flattened two-dimensional representation of the wiring harness, be preserved as the designer toggles between the three-dimensional modeling environment and the two-dimensional environment making additional changes along the way. In a typical implementation, the systems and techniques disclosed herein help to preserve changes made to the visual layout of the flattened two-dimensional representation of the model even if the designer toggles back to the three-dimensional environment, makes additional changes to the three-dimensional model, and subsequently generates a new flattened version of the changed three-dimensional model. In those instances, the new flattened version of the changed three-dimensional model will reflect a preservation of prior changes made to any previous iterations of the visual layout of the two-dimensional representation of the model. In many cases, this preservation of prior changes may eliminate the need to repeatedly redo the same or similar changes in the visual layout of the two-dimensional representation of the model as the design evolves and as additional changes to the visual layout of the flattened version of the three-dimensional model evolves. This substantial preservation can, in some implementations, improve efficiency of the overall design process and reduce the likelihood of errors in producing two-dimensional images (e.g., formboards or the like) of the wiring harness that would be of best use to a wiring harness manufacturer.

One type of design change a designer might make to a three-dimensional model during an iterative design process for a wiring harness is splitting an existing route segment into two or more route subsegments. The resulting two or more route segments may be connected to one another with a connector, splice, etc. Another type of design change a designer might make to a three-dimensional model during an iterative design process is merging two route segments that may have been connected to one another (e.g., end-to-end with a connector, splice, etc.) to create a single route segment from the two merged route segments. If such changes are made to a three-dimensional model, it may be desirable to ensure that any such updates to the model be incorporated into and/or shown as part of a corresponding flattened two-dimensional version of the model without substantially disrupting (or disrupting at all) visual layout details of a prior iteration of the corresponding flattened two-dimensional version of the model. Various implementations of the systems and techniques disclosed herein help to address and ameliorate these concerns.

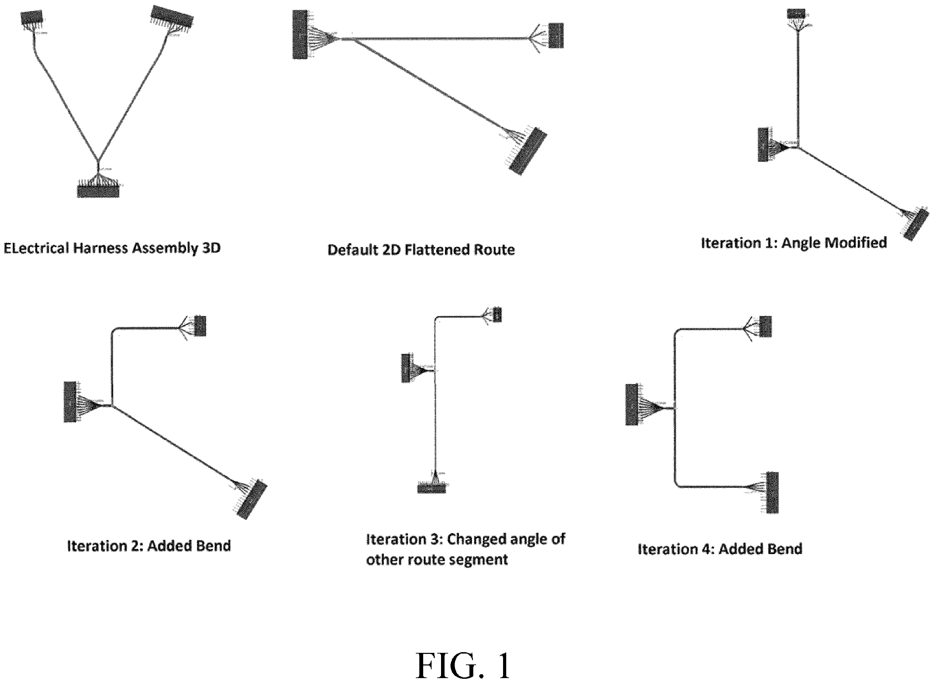

FIG. 1 shows a series of images with varying views of a relatively simple electrical wiring harness assembly design. The view in the image labeled *Electrical Harness Assembly 3D* shows an example of a three-dimensional view of a model of the wiring harness. The illustrated model has three electrical connectors that are connected together by wiring as shown. All the other views in the figure show flattened two-dimensional versions of the model. The flattened two-dimensional versions in all of these other views show the same model (i.e., the model in the *Electrical Harness Assembly 3D* image), but with different visual layouts. For example, the image labeled *Default 2D Flattened Route* shows a flattened two-dimensional version of the model having a visual layout that the computer, in this example, automatically generates in response to the designer, for the first time, activating the computer's flattening functionality, with no other instructions or specifications having been provided by the designer into the computer about the desired visual layout of the flattened two-dimensional version of the model. It can be seen that the flattened, two-dimensional version of the model in the image labeled *Default 2D Flattened Route* includes a two-dimensional representation of the same model elements, including the three connectors and the wiring interconnecting the three connectors as in the *Electrical Harness Assembly 3D* image. The visual layout of the model elements in the *Default 2D Flattened Route* image shows one connector in the upper left of the image with wiring extending from the right side of the connector, coming together in a bundle and then splitting off into two branches, with a first branch continuing to extend horizontally and to the right, and a second branch extending in a slightly downwardly angled direction from the split. Each branch terminates with its wires connecting to a corresponding one of the connectors. Both branches are substantially straight. The wiring is shown as fanning out to connect to each respective connector. The specific visual layout of model elements shown in the *Default 2D Flattened Route* image is only one example of a default visual layout. In various implementations, the first (default) flattened two dimensional version of the model generated by the computer automatically and without further designer input on the visual layout, may have a completely different visual layout than the one shown in the *Default 2D Flattened Route* image.

The rest of the images shown in the figure show a sequence of iterative changes being made to the visual layout of the flattened two-dimensional version of the model in the *Default 2D Flattened Route* image.

For example, the image labeled *Iteration 1: Angle Modified* shows the same flattened two-dimensional version of the model as shown in the *Default 2D Flattened Route* image, but with the first branch bent vertically upward (instead of being disposed horizontally as shown in the *Default 2D Flattened Route* image). In a typical implementation, the computer provides the designer access to tools or functionalities, within the virtual two-dimensional environment, to modify the angle of the first branch as shown, thereby changing the visual layout, to produce the iteration of the flattened two-dimensional version of the model shown in the *Iteration 1: Angle Modified* image.

Similarly, the image labeled *Iteration 2: Added Bend* shows the same flattened two-dimensional version of the model as shown in the *Iteration 1: Angle Modified* image, but with a bend added about midway along the first branch. In a typical implementation, the computer provides the designer access to tools or functionalities, within the virtual two-dimensional environment, to create the bend in the first branch as shown, to produce the iteration of the flattened two-dimensional version of the model shown in the *Iteration 2: Added Bend* image.

The image labeled *Iteration 3: Changed Angle of Other Route Segment* shows the same flattened two-dimensional version of the model as shown in the *Iteration 2: Added Bend* image, but with a bend added about midway along the first branch. In a typical implementation, the computer provides the designer access to tools or functionalities, within the virtual two-dimensional environment, to create this bend in the first branch as shown, to produce the iteration of the flattened two-dimensional version of the model shown in the *Iteration 3: Changed Angle of Other Route Segment* image.

Likewise, the image labeled *Iteration 4: Added Bend* shows the same flattened two-dimensional version of the model as shown in the *Iteration 3: Changed Angle of Other Route Segment* image, but with a bend added about midway along the second branch. In a typical implementation, the computer provides the designer access to tools or functionalities, within the virtual two-dimensional environment, to create this bend in the second branch as shown, to produce the iteration of the flattened two-dimensional version of the model shown in the *Iteration 4: Added Bend* image.

In a typical implementation, the computer provides the designer with access to tools or functionalities, within the virtual two-dimensional environment, that enable the designer to navigate from the two-dimensional environment, where the latest one of the illustrated iterations (1-4) would be displayed, back to the three-dimensional modeling environment, where the three-dimensional model wiring harness (*e.g.,* the one shown in the *Electrical Harness Assembly 3D* image) is shown and presented for further possible design modifications (e.g., adding wires, removing wires, changing wiring connectors and/or connections, changing wire lengths, etc.). In a typical implementation, the systems and techniques disclosed herein, facilitate preserving any changes made to the visual layout of the two-dimensional version of the model, e.g., the multiple iterations (1-4) that produced the visual layout shown in the *Iteration 4: Added Bend* image, while enabling the designer to make additional design changes to the model (e.g., in the three-dimensional environment) and generating a new two-dimensional version of the revised model by applying a new flattening function to the revised three-dimensional model. In a typical implementation, therefore, the resulting flattened two-dimensional version of the revised three-dimensional model will include the additional design changes (made in the three-dimensional environment), but will still appear with a visual layout that is very similar (e.g., aside from incorporating the design change, the visual layout may be identical) to the visual layout in the *Iteration 4: Added Bend* image.

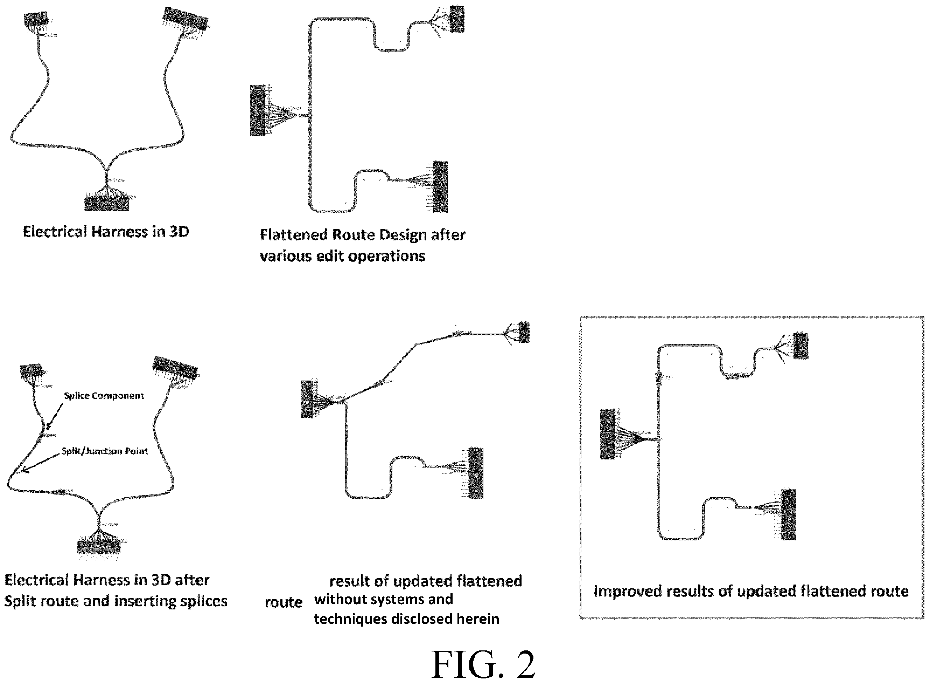

FIG. 2 shows an example of a series of images with varying images that represent a relatively simple electrical wiring harness at different stages in the design process. The first stage (shown in the *Electrical Harness in 3D* image) shows a three-dimensional model of the wiring harness in a virtual three-dimensional modeling environment. The second stage (shown in the *Flattened Route Design after Various Edit Operations* image) shows a flattened, two-dimensional visual representation of the model in a virtual two-dimensional viewing environment. The third stage (shown in the *Electrical Harness in 3D after Split route and inserting splices* image) shows a modified version of the three-dimensional model in the virtual three-dimensional modeling environment with modifications that include a split/junction point and a splice component having been added to one of the route segments of the wiring harness in the model. These modifications to the underlying design itself are made in the three-dimensional modeling environment. In a typical implementation, the changes represented in the third stage (shown in the *Electrical Harness in 3D after Split route and inserting splices* image ) would take place after the viewing and visual layout edits in the second stage (shown in the *Flattened Route Design after Various Edit Operations* image).

The other two images in FIG. 2 (labeled *Result of Updated Flattened Route Without Systems and Techniques Disclosed Herein* and *Improved results of updated flattened route)* show the result of a subsequent flattening procedure being applied to the third stage three-dimensional model (shown in the *Electrical Harness in 3D after Split route and inserting splices* image) using the systems and techniques disclosed herein vs. not using the systems and techniques disclosed herein. Comparing these two possible outcomes to the *Flattened Route Design after various edit operations* image reveals that the visual layout of the *Improved results of updated flattened route* image is significantly more similar in visual layout to the *Flattened Route Design after various edit operations* image than the *Result of Updated Flattened Route Without Systems and Techniques Disclosed Herein.* It is clear that, if the computer produces the *Result of Updated Flattened Route Without Systems and Techniques Disclosed Herein* image, the designer will want to, and most likely will decide to take additional steps to edit its visual layout to make its visual layout more similar to its prior layout (in the *Flattened Route Design after various edit operations* image. These additional steps may be avoided by the computer implementing the modified approach disclosed herein that produces the visual layout shown in the *Improved Results of Updated Flattened Route* image. That image, aside from showing the added split/junction and added splice component (added to create the *Electrical Harness in 3D after Split route and inserting splices* image), has a visual layout that is virtually identical to the visual layout of the *Improved results of updated flattened route* image.

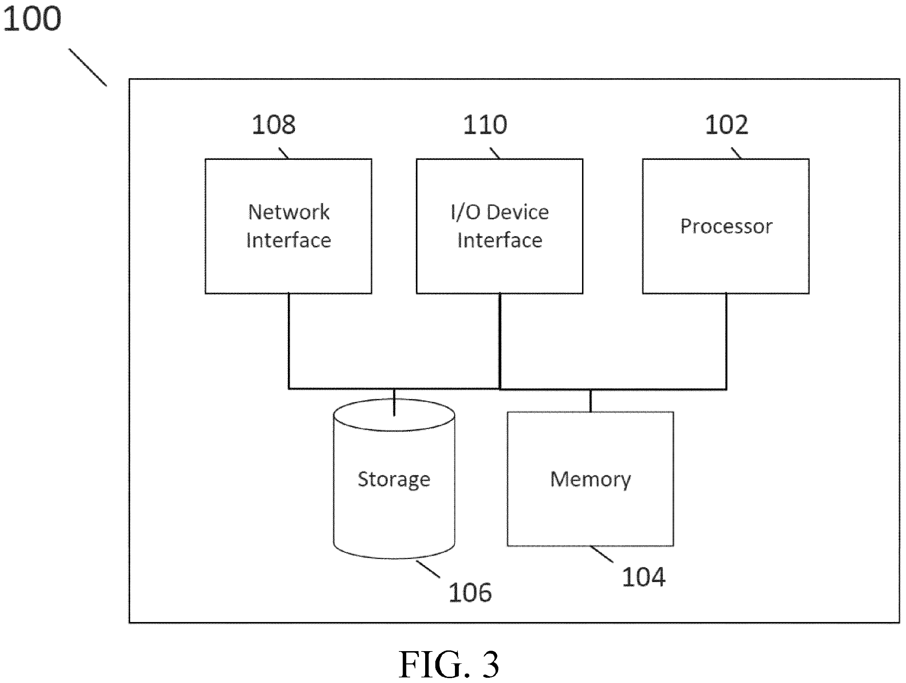

FIG. 3 is a schematic representation of an exemplary computer 100 configured to implement the systems and functionalities disclosed herein. More specifically, in a typical implementation, computer 100 is configured to facilitate the flattening of a three-dimensional model (e.g., of a wiring harness) to generate a flattened two-dimensional version of the three-dimensional model in a virtual environment. Moreover, the computer 100 is configured to perform iterative flattening processes, with optional design changes made to the model between sequential flattening processes, with each iterative flattening process largely (or completely) preserving visual layout details from prior iterations that are applicable to the flattened two-dimensional version of the model.

The computer 100 has a processor 102, computer-based memory 104, computer-based storage 106, a network interface 108, an input/output device interface 110, and a bus that serves as an interconnect between the components of the computer 100. The bus acts as a communication medium over which the various components of the computer 100 can communicate and interact with one another.

The processor 102 is configured to perform the various computer-based functionalities disclosed herein as well as other supporting functionalities not explicitly disclosed herein. Typically, the processor 102 performs these, and other, functionalities by executing computer-readable instructions stored on a computer-readable medium (e.g., in 104 or 106). In various implementations, some of these functionalities may be performed with reference to data stored in the computer-readable medium and/or received from some external source (e.g., an input / output (I/O) device via the I/O device interface 110 and/or from an external network via the network interface 108).

The computer 100 has volatile and non-volatile memory. In a typical implementation, memory 104 provides a form of volatile storage storing computer-readable instructions that, when executed by the processor 102, cause the processor 102 to perform or facilitate some (or all) of the computer-based functionalities disclosed herein. Moreover, in a typical implementation, storage 106 provides a form of non-volatile memory storing computer-readable instructions, such as instructions to implement an operating system, configuration information, etc. The various system memory resources (e.g., 104, 106) may store data, as well.

In a typical implementation, the memory 104 stores computer-readable instructions that, when executed by the processor 102, cause the processor 102 to execute functionalities disclosed herein as being attributable to the computer (or computer system). In some implementations, these instructions are for a computer-aided design program adapted to include the functionalities disclosed herein incorporated therein. An example of a computer-aided design program suitable for adapting to incorporate the functionalities disclosed herein in this regard is the SolidWorks^{®} computer program, available from Dassault Systèmes SolidWorks Corporation, the applicant of the current application. The computer-aided design program, so adapted, would include design flattening functionalities disclosed herein that efficiently flatten or convert 3D electrical harness assembly designs into clean, readable, and highly useful 2D versions of the electrical harness assembly designs and preserve prior layout details in the 2D versions thereof.

The network interface 108 is a component that enables the computer 100 to connect to any one or more of a variety of external computer-based communications networks, including, for example, local area networks (LANs), wide area networks (WANs), such as the Internet, or the like. In various implementations, the network interface 108 can be implemented in hardware, software, or a combination of hardware and software.

The input/output (I/O) device interface 110 is a component that enables the computer 100 to interface with any one or more input or output devices, such as a keyboard, mouse, display, microphone, speakers, printers, etc. In various implementations, the I/O device interface can be implemented in hardware, software, or a combination of hardware and software. In a typical implementation, the computer may include one or more I/O devices (*e.g.,* a computer screen, keyboard, mouse, printer, touch screen device, etc.) connected to the I/O device interface 110. These I/O devices (not shown in FIG. 3) act as human-machine-interfaces (HMIs) and are generally configured enable a human user to interact with the system 100 to access and utilize functionalities, particularly those related to computer-aided design, and flattening an electrical harness assembly design, as disclosed herein.

In an exemplary implementation, the computer 100 is connected to a display device (e.g., via the I/O device interface 110) and configured to present at the display device a visual representation of an interface to a product design environment, such as the one provided by and within the SOLIDWORKS^{®} computer program, adapted to include the functionalities disclosed herein. The interface and its visual representation on the computer-based display device, in a typical implementation, provides the user with access to the flattening functionalities disclosed herein, and displays (e.g., on a display device coupled to the I/O device interface 110) a visual representation of a 3D model of the electrical wiring harness assembly design before flattening and a flattened 2D version of the electrical harness assembly model after flattening, as well as other information that may be included in a formboard type of drawing of an electrical harness.

In some implementations, the computer 100 and its various components may be contained in a single housing (e.g., as in a personal laptop) or at a single workstation. In some implementations, the computer 100 and its various components may be distributed across multiple housings, perhaps in multiple locations on a network. Each component of the computer 100 may include multiple versions of that component, possibly working in concert, and those multiple versions may be in different physical locations and connected via a network. For example, the processor 102 in FIG. 3 may represent multiple discrete processors in different physical locations working together to perform processes attributable to the processor 102 in a coordinated manner. A wide variety of possibilities regarding specific physical implementations are possible.

In various implementations, the computer 100 may have additional elements not shown in FIG. 3. These can include, for example, controllers, buffers (caches), drivers, repeaters, receivers, etc. Furthermore, the interfaces (e.g., 108, 110) may include elements not specifically represented in FIG. 3, including, for example, address, control, and/or data connections to facilitate communications between the illustrated computer components.

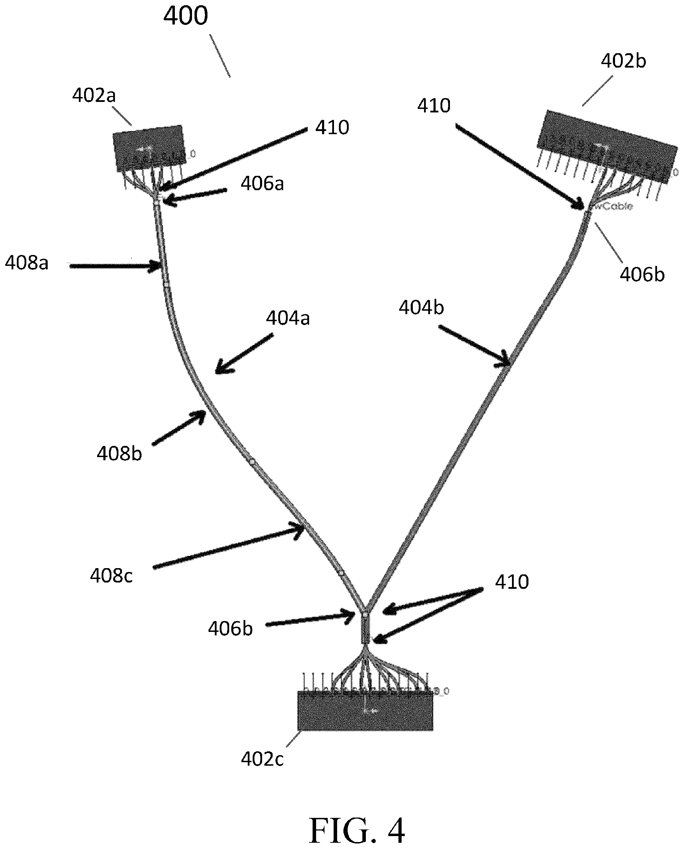

FIG. 4 is a visual representation of the three-dimensional wiring harness model (numbered 400 in FIG. 4) from the *Electrical Harness Assembly 3D* image in FIG. 1. In an exemplary implementation, the computer 100 enables a designer to create and/or modify/edit the three-dimensional wiring harness model. Moreover, the computer 100 is configured to store the three-dimensional wiring harness model 400 in memory (e.g., 104) and display the visual representation of the three-dimensional wiring harness model 400 to a designer for review/modification/editing.

The illustrated visual representation shows that the model 400 has three electrical connectors 402a, 402b, and 402c that are connected together by wiring as shown. The wiring includes a first route segment 404a that extends between a start point 406a (near connector 402a) and an end point 406c (near connector 402c), and a second route segment 404b that extends between a start point 406b (near connector 402b) and end point 406c (near connector 402c). The first route segment 404a in the image is represented by three sketch segments - a first sketch segment 408a, a second sketch segment 408b, and a third sketch segment 408c. The illustrated wiring harness 400 includes a plurality of junction points 410 as well.

The computer 100, in a typical implementation, stores the three-dimensional model 400 in memory 104 with route-specific data structures for the model 400. The route-specific data structures may have the following configuration (in Table 1):

**Table 1**

| *RouteSegmentData3D_c* |
|---|
| m_RouteSegmentID |
| m_RouteSegmentLength3D |
| m_StartPoint3DIndex |
| m_EndPoint3DIndex |
| m_ListofSketchSegments3D |

This data structure includes data that would be specific to one particular route segment, of potentially several, in a corresponding model. Typically, a model may be represented overall by a collection of data that includes multiple such data structures, with one data structure per route segment in the model. Model 400, for example, includes two route segments 404a, and 404b. Model 400, therefore, may be represented in computer memory by a collection of data that includes two such data structures, one for route segment 404a, and one for route segment 404b. More complex models may, of course, have more of such data structures.

In the above data structure, *RouteSegmentData3D* c is the name of the data structure class and logically corresponds to a particular one of the route segments in the associated model (e.g., model 400). In an exemplary implementation, the *RouteSegmentData2D_*c may be stored as a member variable. In the context of model 400, *RouteSegmentData3D_c* may logically correspond to route segment 404a. In that case, the computer 100 may include a second data structure with a different *RouteSegmentData3D* c name that corresponds to route segment 404b. The other data entries in the illustrated data structure represent various details (e.g., in the form of member variables) associated with the corresponding route segment. For example, in the illustrated example, *m*_RouteSegmentID is a member variable that represents an identifier (ID) of the associated route segment, *m_RouteSegmentLength3D* is a member variable that includes a numerical value representing a length of the associated route segment in the three-dimensional modeling environment, *m_StartPoint3DIndex* is a member variable that holds an index or position for a start point of the associated route segment in the three-dimensional modeling environment, *m_EndPoint3DIndex* is a member variable that holds an index or position for an end point of the associated route segment in the three-dimensional modeling environment, and *m_ListofSketchSegments3D* is a member variable that holds one or more member variables that represent a list of three-dimensional sketch segments, each of which forms a portion of the associated route segment. As an example, the list of three-dimensional sketch segments in *m_ListofSketchSegments3D* for model 400 would include sketch segment 408a, sketch segment 408b, and sketch segment 408c. Of course, in various implementations, other data associated with model 400 may be stored in memory 104, as well.

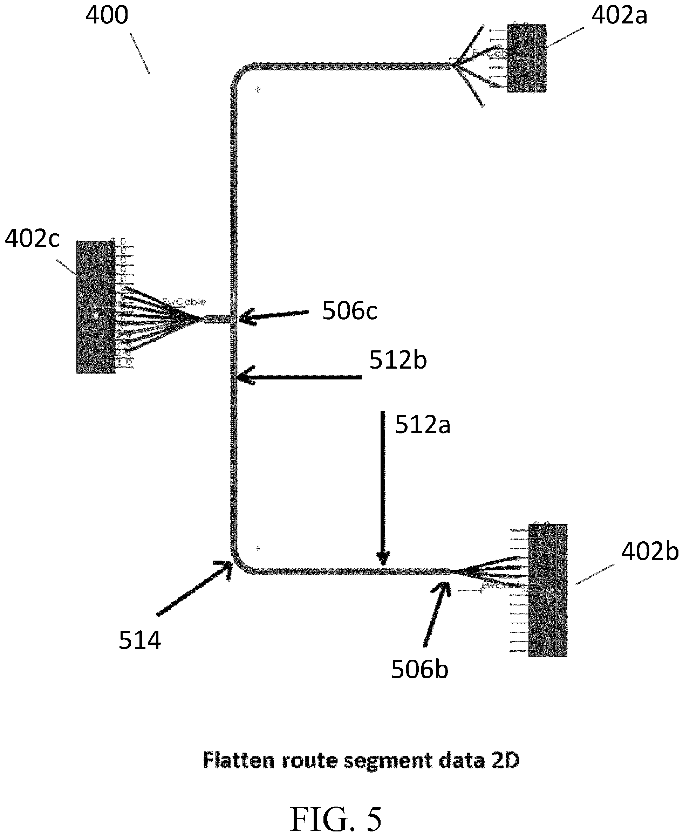

FIG. 5 is a visual representation of the flattened two-dimensional version of the wiring harness model 400 from the *Iteration 4: Added Bend* image in FIG. 1. In an exemplary implementation, the computer 100 is configured to store data representative of the flattened two-dimensional version of the wiring harness model 400 in memory (e.g., 104) and to display the visual representation of the two-dimensional wiring harness model 500 to a designer for review/modification/editing.

The illustrated visual representation shows that the model 400 has three electrical connectors 402a, 402b, and 402c that are connected together by wiring as shown. The wiring represents the first route segment that extends between a first point (near connector 402a) and a second point (near connector 402c), and a second route segment that extends between a first point (near connector 402b) and second point (near connector 402c). The visual representation of the model includes, for example, a first line sketch segment 512a, an arc sketch segment 514, and a second line sketch segment 512b. The first line sketch segment 512a, the arc sketch segment 514, and the second line sketch segment 512b, in the illustrated visual representation, extend between a start point 506b (near connector 402b) and an end point 506c (near connector 402c).

The computer 100, in a typical implementation, stores the data associated with the two-dimensional version of the model 400 in memory 104 with route-specific data structures for the two-dimensional version of the model including, typically, data associated with the particular visual layout. The route-specific data structures may have the following configuration (in Table 2):

**Table 2**

| *RouteSegmentData2D_c* |
|---|
| m_RouteSegmentID |
| m_RouteSegmentLength2D |
| m_StartPoint2DIndex |
| m_EndPoint2DIndex |
| m_StartPointIndex3D |
| m_EndPointIndex3D |
| m_ListofSketchSegments2D |

This data structure includes data that would be specific to one particular route segment, of potentially several, in a corresponding two-dimensional representation of a model. In a typical implementation, the data structure is created when a corresponding three-dimensional model is flattened to create the associated two-dimensional version of the model. Typically, a model may be represented overall by a collection of data that includes multiple such data structures, with one data structure per route segment in the model.

In the above data structure, *RouteSegmentData2D_*c is the name of the data structure class and logically corresponds to a particular one of the route segments in the associated model (e.g., model 400). In an exemplary implementation, the *RouteSegmentData2D_*c may be stored as a member variable. In the context of model 400, *RouteSegmentData2D_c* may logically correspond to the portions of the two-dimensional version of the model that correspond to, overlap with, or include route segment 404a. In that case, the computer 100 may include a second data structure with a different *RouteSegmentData2D* c name that corresponds to the route segment 404b portion of the model. In an exemplary implementation, each *RouteSegmentData2D_*c data structure has a corresponding *RouteSegmentData3D_*c data structure, and vice versa.

The other data entries in the illustrated data structure represent various details (e.g., in the form of member variables) associated with the corresponding portion of the two-dimensional version of the model. For example, as above, in the illustrated example, *m_RouteSegmentID* is a member variable that represents an identifier (ID) of the associated route segment. In a typical implementation, *m*_RouteSegmentID in *RouteSegmentData2D_*c has the same value as *m_RouteSegmentID* in the corresponding *RouteSegmentData2D_c.* Meanwhile, *m_RouteSegmentLength2D* is a member variable that includes a numerical value representing a length of the portion of the two-dimensional version of the model that is associated with the route segment, *m_StartPoint2DIndex* is a member variable that holds an index or position for a start point of the associated route segment in the two-dimensional virtual environment, and *m_EndPoint2DIndex* is a member variable that holds an index or position for an end point of the associated route segment in the two-dimensional virtual environment. As above, *m_StartPoint3DIndex* is a member variable that holds an index or position for a start point of the associated route segment in the associated three-dimensional model, and *m_EndPoint3DIndex* is a member variable that holds an index or position for an end point of the associated route segment in the associated three-dimensional model. Finally, *m_ListofSketchSegments2D* is a member variable that holds one or more member variables that represent a list of two-dimensional sketch segments, each of which forms a portion of the image that is associated with the corresponding route segment. As an example, the list of two-dimensional sketch segments in *m_ListofSketchSegments2D* for one portion of the flattened two-dimensional version of model 400 in FIG. 5 may include first line sketch segment 512a, the arc sketch segment 514, and the second line sketch segment 512b. Of course, in various implementations, other data associated with the flattened two-dimensional version of model 400 may be stored in memory 104 (and, optionally, as part of *RouteSegmentData2D_*c, as well. Such other data may include, for example, a start point or start point index for a two-dimensional location of a start point for each associated sketch segment, and an end point or end point index for a two-dimensional location of an end point for each associated sketch segment.

In various implementations, the computer 100 is able to accommodate one or more of these changes: A) splitting of one route segment into more than one route segments, and B) merging more than one route segments into one route segment. Specifically, the computer 100 is able to generate a flattened, two-dimensional version of a model that has been modified to include one or more of these changes, while preserving, to a great extent at least, the visual layout characteristics of a prior flattened, two-dimensional version of the model before being so modified. Each of these is change options (one route segment being split and two or more route segments being merged) is discussed below in turn.

### One Route segment split into multiple route segments:

The computer 100 is configured to enable a designer to split a route segment in a three-dimensional model of a wiring harness into multiple route segments. There are a variety of ways in which this may be accomplished. In one example, the computer 100 may be executing the SOLIDWORKS^{®} computer program, with its electrical Routing^{™} add-ins, which presents to the designer a "Split Route" command, the selection of which by the designer, splits an existing route segment in the model into multiple route segments. A particular route segment may include a collection of sketch segments. In such a case, the "Split Route" command may work on a particular one of the sketch segments. In that case, the computer 100, in response to input from the designer, would split a selected sketch segment of the selected route segment into two sketch entities (or two sketch segments), thereby splitting the selected route segment. The computer 100, in a typical implementation, creates a split point/junction point between the two sketch entities and, therefore, between the two route segments. In a typical implementation, the computer 100 is configured to enable the splitting of a route segment into two route segments by enabling the designer to add a splice component to the route segment.

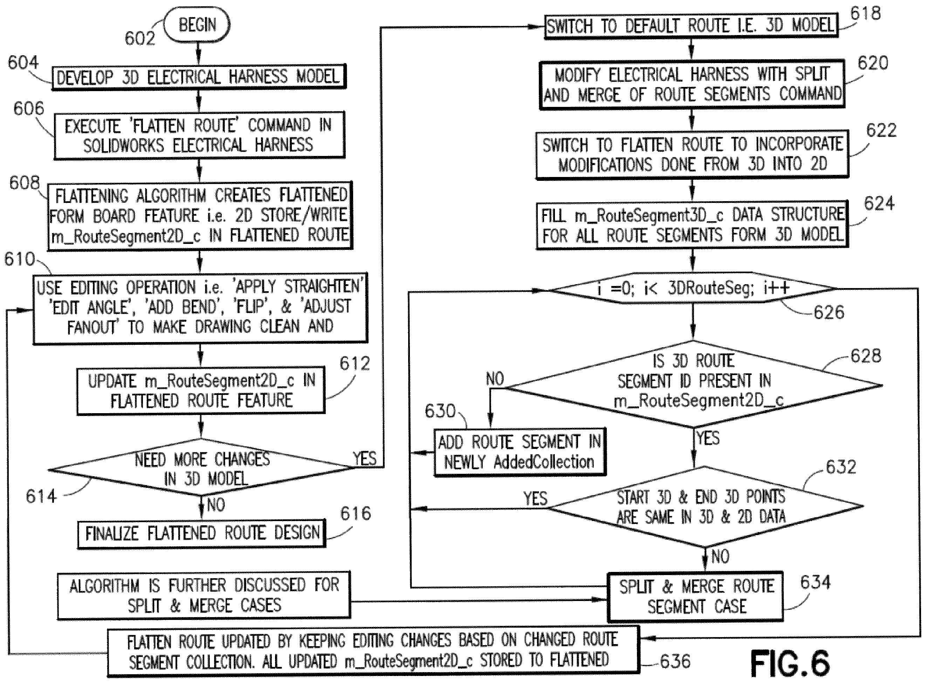

In that situation (e.g., where a designer has added a split in a route segment for a wiring harness model), the computer 100, when creating a flattened two dimensional version of the model, is configured to accommodate and accurately reflect the newly added split while maintaining layout characteristics (including any prior edits to the layout characteristics) of a prior flattened two-dimensional version of the model (that did not include the newly added split). Specifically, in a typical implementation, the computer 100 uses the *m_RouteSegment3D_*c data structure and the *m_RouteSegment2D_*c data structure to identify the route segments that exist in the model after executing the split route functionality. As an example, any such changed route segments may be identified by the computer 100 implementing the processes set forth in the FIG. 6 flowchart (discussed below).

The flowchart of FIG. 6 begins at 602 and includes developing a three-dimensional model of a wiring harness (at 604). The SOLIDWORKS^{®} Electrical 3D computer program, for example, enables designers to design wiring diagrams and routes, creating three-dimensional paths for wires, cables, harnesses, etc., placing connectors, clips, etc., computing lengths of actual routing paths, etc. In a typical implementation, a designer would interact with a computer program such as the aforementioned SOLIDWORKS^{®} Electrical 3D computer program to develop the three-dimensional model of the wiring harness.

Next (at 606), the process represented by the illustrated flowchart includes executing a "flatten route" command. In a typical implementation, the software program used to develop / create the three-dimensional model of the wiring harness would display to the designer a graphical user interface (GUI) that includes a user interface (UI) element that is selectable to initiate a computer-implemented flattening process to be applied to the virtual three-dimensional wiring harness model. In an exemplary implementation, the designer (at 606) may select the "flatten route" command to initiate the process, in response to which the computer 100 may automatically apply the flattening process (algorithm) to the three-dimensional model.

The flattening algorithm (at 608) produces a flattened two-dimensional version of the three-dimensional model. At this point, the computer 100 creates *m_RouteSegmentData2D_c* (also referred to herein as *RouteSegmentData2D*_c) data structure(s) for the flattened two-dimensional version of the three-dimensional model and based on the corresponding three-dimensional model. The flattening algorithm in the illustrated flowchart produces a flattened formboard feature (that includes the flattened two-dimensional version of the model).

According to the illustrated flowchart, the process (at 610) includes an editing process to make a drawing that includes the flattened two-dimensional version of the model cleaner, more user friendly, etc. Specifically, the edits made here (at 610) modify the visual layout of the flattened two-dimensional version of the model. The specific edits can vary depending on the preferences or the designer and/or manufacturer and/or the intended use of the flattened two-dimensional version of the model. The edits may be made by the designer selecting one or more UI elements and interacting with associated computer-implemented functionalities that the computer software program provides to the designer (typically, on the GUI). The functionalities and associated commands may include, for example, one or more of "apply straighten," "edit angle," "add bend," "flip," "adjust fanout," etc. In a typical implementation, "apply straighten" refers to a computer command or function that straightens the path of a wire or cable segment (e.g., between two points). In a typical implementation, "edit angle" refers to a computer command or function that enables a designer to manually adjust the angle or bend at specific points along a wiring harness. In a typical implementation, "add bend" refers to a computer command or function that enables a designer to manually insert a bend into the wiring harness. In a typical implementation, "flip" refers to a computer command or function that enables a designer to change the orientation or direction of a connector, harness branch or route, for example. In a typical implementation, "adjust fanout" refers to a computer command or function that enables a designer to modify how individual wires exit or spread out from a common point, such as the end of a bundled harness. In various implementations, other editing commands and functionalities may be available for access and utilized by the designer (at 608) to edit the visual layout. In some instances, the extent of edits made at this step may be extensive. Whether extensive or not, it is generally desirable that the edits be preserved (absent deliberate subsequent changes to the edits by the designer), to a great extent at least, even if one or more design details (e.g., length of routes) in the associated three-dimensional model change at subsequent points in the design process.

Next (at 612), the process represented by the illustrated flowchart includes updating the *m _RouteSegmentData2D_*c data structure(s) for the flattened two-dimensional version of the model. If, for example, the edits (made at 610) changed the position, in two-dimensional space, of a start point of a particular route segment in the flattened two-dimensional version of the model, the computer (at 612) updates the corresponding *m_StartPoint2DIndex* in the *m_RouteSegmentData2D_*c data structure for that route segment. Likewise, if the edits (made at 610) changed the position, in two-dimensional space, of an end point of a particular route segment in the flattened two-dimensional version of the model, the computer (at 612) updates the corresponding *m_EndPoint2DIndex* in the *m_RouteSegmentData2D_*c data structure for that route segment. This step 612 is represented in the illustrated flowchart as coming after step 610. This may be correct. However, in some implementations, the computer 100 may implement step 612 automatically for each edit or set of edits as the designer makes those edits. In a typical implementation, however, the computer 100 updates *m_RouteSegmentData2D_*c as needed in view of the edits made before proceeding to any steps following step 612.

If (at 614), the three-dimensional model is complete (e.g., no more changes are needed to be made in the three-dimensional model) and the edits to the visual layout of the two-dimensional version of the model (made at 610) are finished, then the flattened route design (with the flattened two-dimensional version of the model) is (at 616) considered to be complete. In an exemplary implementation, the computer 100, in response to a designer instruction, may set a designation in computer memory associated with the three-dimensional model and/or the associated flattened two-dimensional version of the model indicating completion (i.e., that the design is no longer a work-in-progress).

Once the model and/or its flattened route design are designated as complete (at 616), one or more drawings (including, for example, formboard-style drawings) based on the model and including the two-dimensional version of the model may be provided to a manufacturer (e.g., by some form of electronic transmittal, by printing and physical delivery, or otherwise). The manufacturer typically utilize the drawings provided to manufacture one or more real world versions of the associated wiring harness based on the wiring harness design represented in the drawings provided. The wiring harness may be installed in an end product (e.g., automobile, etc.) to interconnect real world electrical and/or electronic components so as to carry electrical control, data, and/or power signals between those components.

If (at 614), the three-dimensional model is not complete (e.g., the designer decides to make more changes to the model), then the designer interacts with the computer 100 to cause the computer 100 to switch back to three-dimensional modeling environment (at 618). In a typical implementation, the designer is able to navigate between the two-dimensional environment and the three-dimensional modeling environment by selecting a UI element presented on a GUI by the computer 100. In response to returning to the three-dimensional modeling environment, the computer 100 typically ceases to display the flattened two-dimensional version of the model but instead displays the three-dimensional model itself in the three-dimensional modeling environment.

The three-dimensional modeling environment enables the designer to make further design changes to the model, which is part of the process represented in the illustrated flowchart. Specifically, according to the process represented by the flowchart, the designer (at 620) modifies the wiring harness model (e.g., by introducing a split into a route segment or by merging two route segments).

Next, the designer causes the computer 100 (at 622) to switch from the three-dimensional modeling environment back to the two-dimensional flatten route environment. In a typical implementation, the designer may accomplish this by activating the *flatten route* functionality (e.g., by selecting an onscreen UI element). The computer 100, in response to the *flatten route* functionality being activated, incorporates the design modifications made in the three-dimensional modeling environment into the two-dimensional version of the model that the computer 100 displays in the two-dimensional environment. As a result, the computer 100 displays an updated two-dimensional version of the three-dimensional model, where the updated two-dimensional version of the three-dimensional model is aligned with the latest version of the three-dimensional model and includes all the applicable latest design changes.

At 624, the process represented in the flowchart includes the computer 100 filling in (or updating) *m_RouteSegmentData3D_*c in memory (e.g., 104) for all route segments that form the three-dimensional model. In some implementations, prior to 624, *m_RouteSegmentData3D c* already will be populated with data from previous iterations of the model. In that case, the filling of *m_RouteSegmentData3D_*c may simply include overwriting only those data entries that relate to the latest set of design changes. For example, if there has been an update in the latest three-dimensional modeling environment session that has added a split into a route segment, then the associated *m_RouteSegmentData3D_*c data set may be updated at this point to reflect this added split. Likewise, if there has been an update in the latest three-dimensional modeling environment session that has merged two route segments into one, then the associated *m_RouteSegmentData3D_c* data set may be updated at this point to reflect this merging.

At 626, the computer 100 enters a functional loop that iterates over the number of three-dimensional route segments (e.g., *RouteSegmentData3D_c*) that make up the wiring harness in the three-dimensional wiring harness model. The loop, as indicated at 626 is initialized with i, a variable stored in memory, having an initial value of zero (i = 0). The value assigned to i is increased by one (i++) after each loop. The loop is iterated for as long as the value of i is less than the number of total three dimensional route segments (e.g., i *< 3DRouteSeg,* where *3DRouteSeg* is a count of route segments in the model) in the three-dimensional wiring harness model. The loop is executed once per route segment. So, in a typical implementation, with this functional loop (that the computer 100 enters at 626), the computer 100 processes each three-dimensional route segment one at a time.

More specifically, according to the illustrated functional loop, for each three-dimensional route segment, the computer 100 (at 628) evaluates whether the 3D route segment ID *m_RouteSegmentID* from the *m_RouteSegmentData3D_c* data set is present in the corresponding *m_RouteSegmentData2D_c* for the corresponding flattened two dimensional version of the model. In a typical implementation, this step (628) may be performed by the computer 100 comparing the *m*_RouteSegmentID value from the three-dimensional model to each *m_RouteSegmentID* value in the corresponding *m_RouteSegmentData3D_c* data set. If the computer 100 (at 628) determines that the 3D route segment ID *m*_RouteSegmentID from the *m_RouteSegmentData3D_c* data set is not present in the corresponding *m_RouteSegmentData2D_c,* the computer 100 (at 630) adds the missing route segment to a newly added collection (e.g., a group of route segments stored as data in memory that correspond to newly added route segments in the three-dimensional model and/or need to be represented by 2D route segments in the corresponding flattened two dimensional version of the model. After adding the missing route segment (at 630), the computer returns to step 626, increments i, and continues the process accordingly.

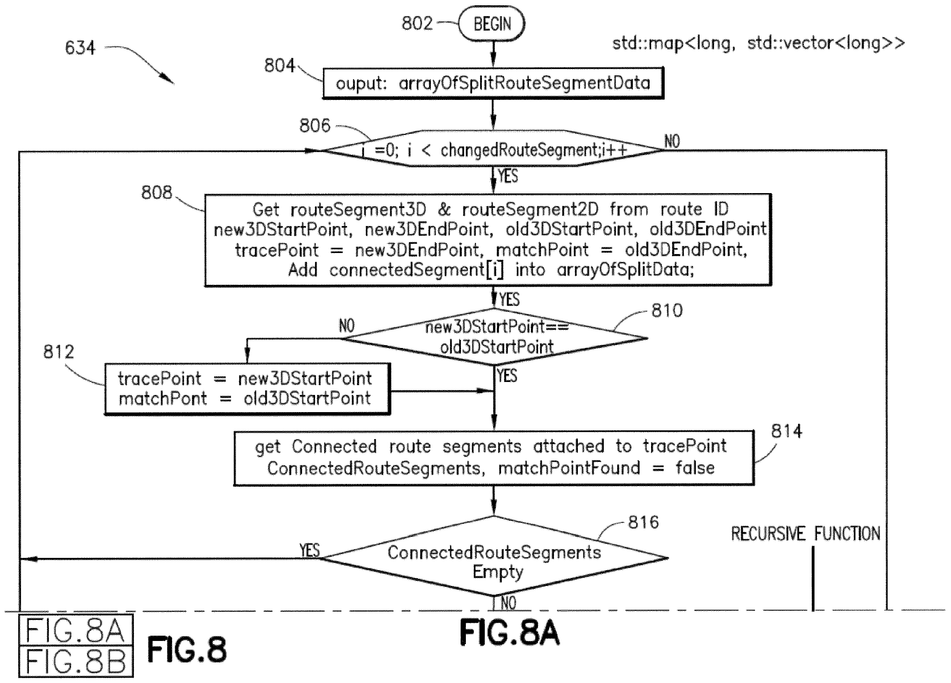

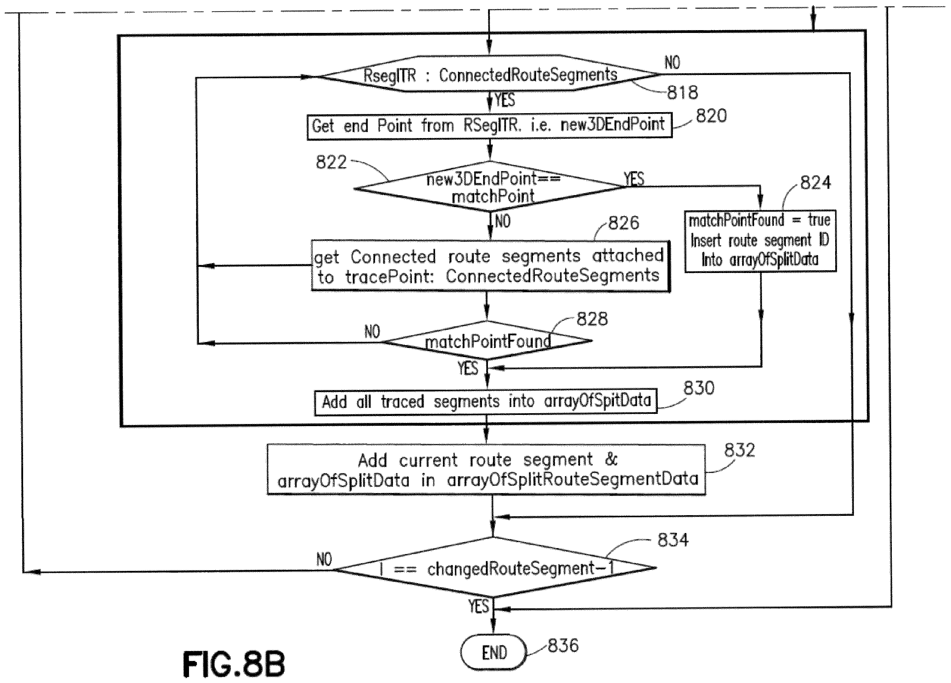

If the computer 100 determines (at 628) that the 3D route segment ID (e.g., *m_RouteSegmentID)* is present in the corresponding *m_RouteSegmentData2D_c* (e.g., because a matching *m*_RouteSegmentID was identified in *m_RouteSegmentData2D_c*), the computer 100 proceeds to determine (at 632), for that route segment, whether the three dimensional start and end points in the *m_RouteSegmentData3D* data set are the same as the three dimensional start and end points in the *m_RouteSegmentData2D* data set. Specifically, in a typical implementation, the computer 100 (at 632) compares the *m_StartPoint3DIndex* in the *m_RouteSegmentData3D_*data set to the *m_StartPointIndex3D* in the *m_RouteSegmentData2D* data set, and compares of *m EndPoint3DIndex* in the *m _RouteSegmentData3D_*data set to the *m_EndPointIndex3D* in the *m_RouteSegmentData2D* data set. If the computer 100 (at 632) determines that both the three-dimensional start points and three-dimensional end points are the same in the *m_RouteSegmentData3D* data set and the *m_RouteSegmentData2D_*data set ("Y" in the illustrated flowchart), then the computer 100 continues the process by returning to step 626 in the illustrated flowchart. However, if the computer 100 (at 632) determines that either the *m_StartPoint3DIndex* in the *m_RouteSegmentData3D* data set is different than the *m_StartPointIndex3D* in the *m_RouteSegmentData2D* data set, or the *m_EndPoint3DIndex* in the *m_RouteSegmentData3D* data set is different than the *m_EndPointIndex3D* in the *m_RouteSegmentData2D* data set, then the computer 100 proceeds to the process labeled *Split & Merge Route Segment Case* 634, an exemplary implementation of which is detailed in FIG. 8. Essentially, in a typical implementation, if the computer 100 determines (at 628) that the same route segment ID is present in a three-dimensional model dataset and that at least one of either the route segment start or end point ID's do not match in the *m_RouteSegment3D_c & m_RouteSegment2D_c* dataset (at 632), then the computer 100 essentially concludes that a split or a merge has been introduced into a route segment in the three-dimensional model.

The process 634, which is detailed in FIG. 8 discussed below, accommodates a split or merge having been added to the associated route segment model in the corresponding flattened two-dimensional version thereof. In a typical implementation, any changes introduced in that regard are incorporated into the flattened, two-dimensional version of the model being generated and in a manner that tends to preserve visual layout characteristics from the immediately prior iteration of the flattened two-dimensional version of the model. After executing the split and/or merge accommodation procedure (at 634) for that route segment, the computer 100, according to the FIG. 6 flowchart, returns to step 626, increments i, and continues the process accordingly.

If the computer 100 (at 626) that no further route segments remain (i.e., that all route segments in the three-dimensional model have been subjected to the functional loop associated with the 626 entry point, then the computer 100 (at 636) creates an updated version of the flattened two dimensional version of model. More specifically, the computer 100, according to the illustrated flowchart, creates the updated flattened two-dimensional version of the model by keeping editing changes based on a changed route segment collection. Additionally (also at 636), the computer 100 ensures that all updated *m_RouteSegment2D_*c data is stored to, and reflected in, the flattened route. After that, the computer 100 (potentially, e.g., in response to further layout editing from the designer) follows the process back to step 610 in the flowchart for further editing.

Table 3 shows exemplary data that may be stored (e.g., in computer memory) in logical association with route segment(s) in a model. More specifically, the table shows data structures that may be stored for a three-dimensional model (routeSegment3D) after a split has been added to route segments in the model and for a corresponding flattened two-dimensional version of the model (routeSegment2D) that would have existed prior to the route segments being split.

**Table 3: Data regarding route segments present in 3D and 2D data structure**

| **routeSegment3D (New Data) After Split Route** | | | | | **routeSegment2D(Old Data)** | | |
|---|---|---|---|---|---|---|---|
| m_RouteSegmentID | 1 | 3 | 2 | 4 | m_RouteSegmentID | 1 | 2 |
| m_RouteSegmentLength3D(mm) | 150 | 135 | 120 | 130 | m_RouteSegmentLength2D | 285 mm | 250mm |
| m_StartPoint3Dindex | 10 | 50 | 10 | 60 | m_StartPointIndex3D | 10 | 10 |
| m_EndPoint3Dindex | 50 | 20 | 60 | 30 | m_EndPointIndex3D | 20 | 30 |
| m_ListofSketchSegments3D | <1> | <2,3> | <4> | <5,6> | m_StartPoint2DIndex | 100 | 100 |
| | | | | | m_EndPoint2DIndex | 120 | 140 |
| | | | | | m_ListofSketchSegments2D | <1,2,3,4,5,6, 7,8,9,10,11> | <12,13,14,15,16, 17,18,19,20> |

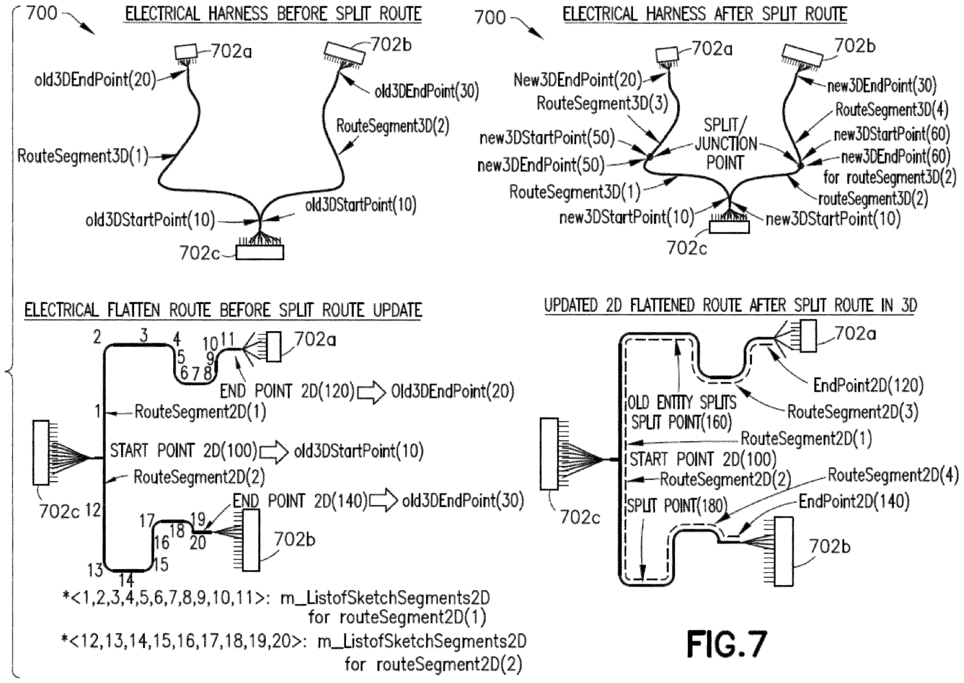

FIG. 7 shows an initial image of a three-dimensional model 700 in a three-dimensional modeling environment (labeled *Electrical Harness before Split Route*), a flattened two-dimensional version of the three-dimensional model (labeled *Electrical Flatten Route Before Split route update*), a subsequent image of the three-dimensional model 700 in the three-dimensional modeling environment and with a split / junction point having been added into each of two route segments (labeled *Electrical Harness after split route*), and a subsequent flattened two-dimensional version of the three-dimensional model with the added split / junction point (labeled *Updated 2D Flattened route after Split route in 3D*). This is an example of a sequence of images that the computer 100 may display to a designer onscreen and in the order just described as the model evolves (when the designer adds splits to a model's route segments). Of note is the fact that although the model is changed in the three-dimensional modeling environment (by adding splits to the model's route segments), integrating those changes into a flattened two-dimensional version of the model do not significantly disrupt the visual layout of the flattened two-dimensional version of the model.

Specifically, in FIG. 7, it can be seen that, aside from the splits having been added into the route segments, the flattened two-dimensional version of the model in the *Updated 2D Flattened route after Split route in 3D* image shares the same visual layout characteristics as the flattened two-dimensional version of the model in the previous version of the two-dimensional (i.e., the version before the added splits, *Electrical Flatten Route Before Split route update* image. For example, in both images, the connectors are configured along lines that are parallel to one another, the central connector 702c is positioned on one side of the image with the other two connectors 702a, 702b positioned on the other side of the image, the major portions of the beginnings of each connecting route segment follows a straight line (either up or down) from a junction point, with a rounded 90 degree bends at the end of that straight line, followed by a straight horizontal portion, followed by another rounded 90 degree bend toward the opposite route segment, followed by a short straight portion, followed by another rounded 90 degree bend, followed by another short straight portion, followed by an outward rounded 90 degree bend, followed by a very short portion, to another bend and a short portion that connects to a junction point for a corresponding one of the connectors 702a, 702b. The fan out to connector 702c extends to the left to the connection points on connector 702c, and the fan outs to each of the other connectors 702a, 702b extend to the right to the connection points on the corresponding connector 702a or 702b. Notably, these visual layout characteristics affect how the model appears (e.g., on screen) on a single two dimensional plane, but does not affect the design details of the model itself. Other visual layout characteristics may contribute to a desired appearance (e.g., neat, orderly, and intuitive / easy-to-understand) of the flattened two-dimensional version of the model. In shifting from the *Flattened Results in 2D* image to the *Flattened updated results with length accommodation with keeping previous edits* image, the computer 100 incorporates the latest change to model (i.e., the added route segment splits), but maintains the visual layout characteristics from the prior *Electrical Flatten Route Before Split route update* image, despite the incorporated design change. In this manner, the visual layout characteristics are preserved from one iteration of the flattened two-dimensional version of the model to the next, despite design changes having been made during an interim three-dimensional modeling session. In a typical implementation, the computer 100 is configured to store information detailing the visual layout characteristics of the flattened two-dimensional version of a model.

The design changes made in the virtual three-dimensional modeling environment (adding the splits in the route segments) results in a change the visual layout of the three-dimensional model being displayed by the computer 100 and typically causes the computer 100 to update *m_RouteSegmentData3D_c* for any affected route segments. Specifically, for each route segment that existed in *m_RouteSegmentData3D_c* prior to an added split, the computer 100 updates (i.e., shortens) the route segment length (*m_RouteSegmentLength3D* in *m_RouteSegmentData3D_c*), changes either the three-dimensional starting point index *(m StartPoint3Dindex*) or the three-dimensional end point index (*m_EndPoint3Dindex)* that existed in *m_RouteSegmentData3D_*c prior to an added split, and changes the three-dimensional list of sketch segments (*m_ListojSketchSegments3D* that existed in *m_RouteSegmentData3D_*c) to reflect the changes being made to accommodate the added split. Similarly, for each route segment that is added in *m_RouteSegmentData3D_c* by virtue of adding the split, the computer 100 adds a new route segment identifier (*m_RouteSegmentID*) to *m_RouteSegmentData3D_c* and for that new route segment identifier, defines a three-dimensional route segment length (*m RouteSegmentLength3D*)*,* a three-dimensional starting point index (*m_StartPoint3Dindex*), *a* three-dimensional end point index (*m_EndPoint3Dindex*),\ and a three-dimensional list of sketch segments *(m - ListofSketchSegments3D*).

In the example represented in the three-dimensional model data structure (routeSegment3D) in Table 3, route segments having identifiers 1 and 2 would have existed prior to adding the split. This is apparent because each of those route segment identifiers (1 and 2) are represented in the routeSegment2D(Old Data) column. For these route segments (1 and 2), it can be seen that the computer 100 updates (i.e., shortens) the route segment lengths (*m_RouteSegmentLength3D* in *m_RouteSegmentData3D_*c).

Specifically, the computer 100 shortens the route segment length for route segment 1 from 285 millimeters (mm) to 150 mm - this is because adding the split into route segment 1 made each portion of the resulting two routes shorter. The split, in this case, would have been added 150 mm from the start point of route segment 1. The computer 100, in this example, does not change the three-dimensional start point index *(m StartPoint3Dindex)* because the start point of route segment 1 did not change by virtue of introducing the split. The computer 100 does, however, change the three-dimensional end point index (m_EndPoint3Dindex) because the end portion of prior route segment 1 gets cut off by the split thereby establishing a new end point (represented by index number 50, instead of 20) for route segment 1. The computer 100, according to the illustrated example, changes the list of sketch segments associated with route segment 1 (*m - ListofSketchSegments3D*) from only one associated sketch segment <1> to multiple associated sketch segments <1,2,3,4,5,6,7,8,9,10,11>.

Likewise, the computer 100 shortens the route segment length for route segment 2 from 250 millimeters (mm) to 120 mm - this is because adding the split into route segment 1 made each portion of the resulting two routes shorter. The split, in this case, would have been added 120 mm from the start point of route segment 2. The computer 100, in this example, does not change the three-dimensional start point index (*m_StartPoint3Dindex*) for route segment 2 because the start point of route segment 2 did not change by virtue of introducing the split. The computer 100 does, however, change the three-dimensional end point index (m_EndPoint3Dindex) for route segment 2 because the end portion of prior route segment 2 gets cut off by the split thereby establishing a new end point (represented by index number 60, instead of 30) for route segment 2. The computer 100, according to the illustrated example, changes the list of sketch segments associated with route segment 2 (*m_ListofSketchSegments3D*) from only one associated sketch segment <4> to multiple associated sketch segments <12,13,14,15,16,17,18,19,20>.

In the example represented in the three-dimensional model data structure (routeSegment3D) in Table 3, route segments having identifiers 3 and 4 would have been added as a result of adding the split (with route segment 1 splitting into route segment 1 and route segment 3; and with route segment 2 splitting into route segment 2 and route segment 4). This is apparent because neither of those route segment identifiers (3 or 4) is represented in the routeSegment2D(Old Data) column. For each these route segments (3 and 4), it can be seen that the computer 100 populates an entirety of a model route segment (*routeSegment3D*).

Specifically, for new route segment 3, the computer 100 adds a new route segment identifier "3" (*m_RouteSegmentID*) to *m_RouteSegmentData3D* c and for that new route segment identifier 3, the computer 100 defines a three-dimensional route segment length (*m_RouteSegmentLength3D*) of 135mm, a three-dimensional starting point index (*m_StartPoint3Dindex*) of 50, a three-dimensional end point index (*m_EndPoint3Dindex)* of 20, and a three-dimensional list of sketch segments (*m_ListofSketchSegments3D*) that includes

### <2,3>.

Likewise, for new route segment 4, the computer 100 adds a new route segment identifier *"4"* (*m_RouteSegmentID)* to *m_RouteSegmentData3D_*c and for that new route segment identifier 4, the computer 100 defines a three-dimensional route segment length (*m_RouteSegmentLength3D*) of 130mm, a three-dimensional starting point index (*m_StartPoint3Dindex*) of 60, a three-dimensional end point index (*m_EndPoint3Dindex*) of 30, and a three-dimensional list of sketch segments (*m_ListofSketchSegments3D*) that includes

### <5,6>.

In an exemplary implementation, the computer 100 may update a data structure that may be stored for a three-dimensional model (routeSegment3D) after a split has been added to route segments in the model and for a corresponding flattened two-dimensional version of the model (routeSegment2D) that would have existed prior to the route segments being split.

FIG. 8 is a flowchart that shows an implementation of a computer-implemented process for identifying a newly added route split in a three-dimensional model being flattened.

In some implementations, the *m_RouteSegment3D_c* data set may be used to trace the route segments in case of the Split route update. Unless otherwise indicated, the following terminology from FIG. 8, as used herein with respect to the split route functionality, refers to the following. The term *routeSegment3D* refers to a route segment from *a m_RouteSegment3D_c* data set. The term *routeSegment2D* refers to a route segment from a *m_RouteSegment2D_c* data set. The term *new3DStartPoint* refers to a start point index extracted from a *routeSegment3D.* The term *new3DEndPoint* refers to an end point index extracted from a *routeSegment3D.* The term *old3DStartPoint* refers to old 3D start point index stored in *routeSegment2D.* The term *old3DEndPoint* refers to an old 3D end point index stored in *routeSegment2D.* The term *tracePoint* refers to either a *new3DStartPoint* or a *new3DEndPoint* of *routeSegment3D* that is not present in *routeSegment2D.* The term *matchPoint* refers to either an *old3DStartPoint* or an *old3DEndPoint* of *routeSegment2D* that is not present in *routeSegment3D.* The term *newLength3D* refers to the value of *m_RouteSegmentLength3D* for *routeSegment3D.*

The procedure represented by the flowchart begins at 802 and the computer 100 (at 804) executes an *outarrayofSplitRouteSegmentData* function, which, in a typical implementation, takes a route segment that has been split (to produce new shorter route segments) and produces as an output an array with data (e.g., the data in Table 1 and Table 2, above) associated with the new shorter route segments. The flowchart indicates *std: :map<long, std::vector<long>>,* where *map* may refer to an associative container in computer memory (to store the array just generated), for example, that stores key-value pairs, keys are unique, each key is associated with a value and is a long type of key, the elements (e.g., the route segments) in a *std::map* are automatically sorted (e.g., by key), and the second part, *std::vector<long>>* specifies the type of value (e.g., the route segment characteristics, *see, e.g.,* Table 1 and Table 2, above) associated with each key. The processing at step (802 and 804) may be triggered, for example, if/when a route segment has been split. This may happen, for example, if the computer 100 (at 632) determines that either the 3D start points or the 3D end points are different in the 3D data structure and the 2D data structure.

Next (at 806), the computer 100 enters an iterative functional loop. The loop, as indicated at 806, is initialized with i, a variable stored in memory, having an initial value of zero (i = 0). The value assigned to i is increased by one (i++) after each loop. The loop is iterated for as long as the value of i is less than the number of unprocessed changed route segments (e.g., i < *ChangedRouteSegment,* where *ChangedRouteSegments* is a count of unprocessed changed route segments) in the three-dimensional wiring harness model. The loop is executed once per such route segment. So, in a typical implementation, with this functional loop (that the computer 100 enters at 626), the computer 100 processes each changed three-dimensional route segment one at a time.

According to the illustrated functional loop, for each changed three-dimensional route segment, the computer 100 (at 808) gets (e.g., from computer memory) a variety of route data for that route segment. Specifically, the computer 100, according to the illustrated flowchart, gets the *m _RouteSegment3D_*and *mRouteSegment2D* for the route ID. The computer 100 gets the *new3DStartPoint,* the *new3DEndPoint,* the *old3DStartPoint,* the *old3DEndPoint,* the *tracepoint* (which may, under certain circumstances, equal the *new3DEndPoint*), the *matchPoint* (which may, under certain circumstances, equal the *old3DEndPoint*). The flowchart indicates that the computer 100 also gets *connectedSegmentId(i),* i.e., a route segment identifier for any connected route segment connected to the route segment at issue. This information, according to the illustrated flowchart is placed into an array (i.e., *arrayofSplitData*).

Next (at 810), the computer 100 determines whether the *new3DStartPoint* (in the model data structure) is equal to the *old3DStartPoint* (in the flattened model data structure). If the computer 100 determines that the *new3DStartPoint* (in the model data structure) is equal to the *old3DStartPoint* (in the flattened model data structure), then the computer 100 (at 812) sets the *new3DStartPoint* as the *tracePoint* and sets the *old3DStartPoint* as the *matchPoint.* If the computer 100 determines that the *new3DStartPoint* (in the model data structure) is not equal to the *old3DStartPoint* (in the flattened model data structure), then the computer 100 does not set the *new3DStartPoint* as the *tracePoint* and does not set the *old3DStartPoint* as the *matchPoint.* Next, the computer 100 (at 814) gets connected route segments attached to the *tracePoint.* According to the illustrated flowchart, these connected route segments are stored in *ConnectedRouteSegment.* The computer 100 (also at 814) sets *matchpointfound=false,* where the value of false indicates that the computer 100 has not yet found the *matchPoint* among any data considered.

The computer 100 (at 816) checks whether the *ConnectedRouteSegments* dataset is empty. If the computer 100 (at 816) determines that the *ConnectedRouteSegments* dataset is empty, then the computer 100 continues the process by returning to step 806 in the illustrated flowchart. The value for "i" is incremented at 806 and the process continues accordingly. If the computer 100 (at 816) determines that the *ConnectedRouteSegments* dataset is not empty, the computer 100 continues the process by proceeding to performing a recursive function that begins with step 818 in the illustrated flowchart.

The computer 100 (at 818) establishes a range-based for loop for the recursive function by designating the container, *ConnectedRouteSegments,* and setting a loop variable *RSegItR* that holds one element from *ConnectedRouteSegments* each time through the loop. Thus, the computer 100, in a typical implementation, loops over each element in *ConnectedRouteSegments,* assigning it to *RsegItR.* Next (at 820), the computer 100 gets the end point from *RsegItR* (*i.e., the new3DEndPoint*)*.*

The computer 100 (at 822) checks whether the *new3DEndPoint* equals the *matchPoint.* If the computer 100 (at 822) determines that the *new3DEndPoint* equals the *matchPoint* ("Y" in the illustrated flowchart), then the computer 100 (at 824) changes *matchPointFound* to *true* (indicating that the match point has been found), and inserts the route segment ID into *arrayofSplitData.* The computer 100 then (at 830) adds all traced route segments into *arrayofSplitData* and exits the recursive function. If the computer 100 (at 822) determines that the *new3DEndPoint* does not equal the *matchPoint* ("N" in the illustrated flowchart), then the computer 100 (at 826) gets the connected route segments attached to the *tracePoint* to populate *ConnectedRouteSegments.* Next, the computer 100 (at 828) considers whether *matchPoint* has been found. If the computer 100 (at 828) determines that *matchPoint* has been found ("Y" in the illustrated flowchart), the computer 100 (at 830) adds all traced segments into *arrayOfSplitData* and exits the recursive function. At that point, according to the illustrated flowchart, the computer 100 adds the current route segment and *arrayofSplitData* into the *arrayofSplitRouteSegmentData.* Then, the computer 100 (at 834) determines whether *i=changedRouteSegment-1.* If the computer 100 (at 834) determines that *i=changedRouteSegment-1,* then the computer 100 ends the process indicated in the FIG. 8 flowchart. Otherwise, the computer 100 returns to step 806 in the flowchart.

If the computer 100 (at 828) concludes that *matchPoint* has not been found ("N" in the illustrated flowchart), the computer 100 proceeds back to step 818 to continue the process, taking into account the next route segment in *ConnectedRouteSegments,* and continuing the process accordingly. If (at 818) the computer 100 has looped over all of the elements in *ConnectedRouteSegments* ("N" in the illustrated flowchart), then the computer 100, as indicated in the illustrated flowchart, exits the recursive function proceeding to step 834.

In some implementations / instances, as indicated in the flowchart, the computer 100 may proceed back to step 818 after 826 in the illustrated flowchart.

Referring again to the example in FIG. 7 (with reference to Table 3 as well), with the addition of splits, the route segment having ID 1 is converted into 1 & 3 and the route segment having ID 2 is converted in 2 & 4 after application of the split route commands (*e.g.,* in 3D Route). Let us consider split route case for route segment ID 1. The routeSegment3D (ID = 1) is a changed route segment in 3D Route. The routeSegment3D (ID = 1) ends up having a *new3DStartPoint* and a *new3DEndPointID* (10 & 50, respectively), while the old route segment (*i.e.,* routeSegment2D (ID = 1)) has data of *old3DStartPoint* and *old3DEndPointID* (10 & 20, respectively). In this case, *new3DStartPoint* and *old3DStartPoint* are the same in both data structures. The computer 100 makes this determination at 810. Due to this, the computer 100 (at 812) sets the *routeSegment3D* end point (i.e., *new3DEndPoint* (50)) as the *tracePoint.* The *routeSegment3D* data is used to trace connecting route segments. The computer 100 (also at 812) sets the old segment's end point (i.e., *old3DEndPoint*(20)) as the *matchPoint.* In a typical implementation, tracing of the route segment continues until the algorithm gets the *matchPoint* (i.e., 20) from the *routeSegment3D* data. The computer 100 (at 830) adds all the route segments that have been traversed by the tracing algorithm to try to find the *matchPoint* into *arrayOfSplitData.* The *arrayOfSplitData* stores information of {1,3}. The first element inside *arrayOfSplitData* is typically the changed route segment while other elements are newly added route segments due to execution of the split route function. This data may be added, by the computer 100 (at 832) into *arrayOfSplitRouteSegmentData* in a form of a map of {1,{1,3}}. A key in this map is typically the first element of *arrayOfSplitData.*

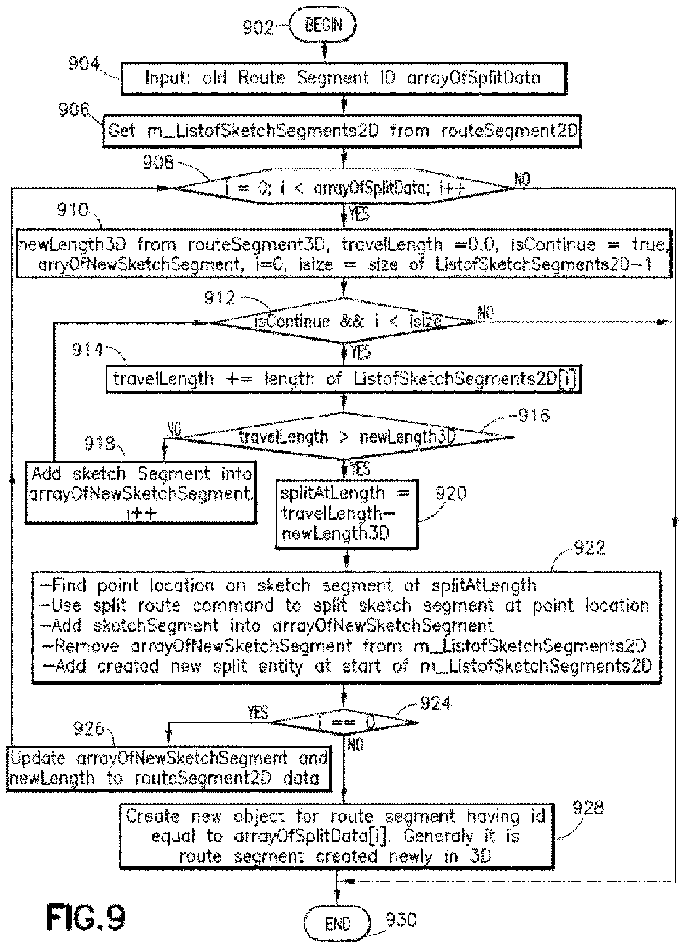

Next, the computer 100 executes functionalities to split any identified sketch segments in the flattened route version of the model. This is represented in the flowchart of FIG. 9, which is discussed below. At a high level, however, this process may involve the computer 100 iterating over the *arrayOfSplitData* container. In a typical implementation, the process involves the computer 100 extracting the *m_ListofSketchSegments2D* from the *routeSegment2D* data structure for a particular route segment (e.g., route segment ID 1). The *m_ListofSketchSegments2D* is iterated in a loop and at each iteration a sketch segment length is added by the computer 100 into *a travelLength* variable. The *travelLength* variable may be used, by the computer 100, as a decision-making variable to determine whether to terminate the iteration (e.g., if *m_RouteSegmentLength3D* for *routeSegment3D* is less than *travelLength,* then the loop gets terminated). Until that time (termination), the compute 100 may insert iterated sketch segments into *arrayNewSketchSegments* and remove them from the *m_ListofSketchSegments2D.* The computer 100 calculates the difference between *travelLength* and *newLength3D* i.e. *m_RouteSegmentLength3D* and at that value, the last sketch segment is split into two sketch segments, with the first sketch segment being inserted by the computer 100 into the *arrayNewSegments* while other sketch segment is added into the existing array of *m_ListofSketchSegments2D.* The *arrayNewSketchSegments* and *newLength3D* is updated to the routeSegment2D. In a typical implementation, this process gets repeated for as long as the *arrayOfConnectedSegments* list holds multiple route segment IDs and create the new *routeSegment2D* object and adds necessary information (e.g., the information described herein as being part of a typical routeSegment2D) into it. In Table 4, the route segment ID 3 does not have information in the old routeSegment2D so that algorithm creates new data for it and updates the needed information into it.

**Table 4**

| m_RouteSegmen tID | m_RouteSegm ent Length2D | m_StartPoint2DIn dex | m_EndPoint2DIn dex | m_StartPointIndex 3D | m_EndPointIndex 3D | m_ListofSketc hSegments2D |
|---|---|---|---|---|---|---|
| 3 | 135 | 160 | 120 | 50 | 20 | 21,4,5,6,7,8,9, 10,11 |
| 4 | 130 | 180 | 140 | 60 | 30 | 22,15,16,17,18 ,19,20 |

Turning now to the flowchart of FIG. 9, which details a particular implementation of the foregoing computer-implemented process for merging sketch segments in a flattened route version of a model.

The process begins (at 902) and the computer 100 (at 904) inputs an old route segment ID and information on the *arrayOfSplitData.* Next, the computer 100 (at 906) gets *m_ListofSketchSegments2D* from *routeSegment2D.*

Next (at 908), the computer 100 enters an iterative functional loop. The loop is initialized (at 908) with i, a variable stored in memory, having an initial value of zero (i = 0). The value assigned to i is increased by one (i++) after each loop. The loop is iterated for as long as the value of i is less than the number of unprocessed split routes in *arrayOfSplitData* (e.g., i < *arrayOfSplitData,* where *arrayOfSplitData* may be a count of unprocessed split route segments) identified by the computer 100. The loop may be executed once per such route segment. So, in a typical implementation, with this functional loop (that the computer 100 enters at 626), the computer 100 processes each split route segment one at a time.

According to the illustrated functional loop, for each split route segment, the computer 100 (at 910) gets *newLength3D* from *routeSegment3D,* initializes the *travelLength* variable to zero by assigning the value 0.0 to the *travelLength* variable, sets the variable *isContinue* to the Boolean value "true" to signal that the process should continue, establishes an *arrayOfNewSketchSegments* container, setting up a loop with i=0, isize= size of ListofSketchSegments2D-1 (where i=0 indicates that the loop index starts at 0, and isize = size of ListOfSketchSegments2D - 1 stores the last valid index (size minus one) of the *ListOfSketchSegments2D* container).

Next, the computer 100 (at 912) determines whether *isContinue* is true and whether i is less than *size* (e.g., the number of elements in isize). If the computer 100 (at 912) determines that *isContinue* is not true and/or i is not less than *size* ("N" in the illustrated flowchart), then the computer 100 ends the process represented in the illustrated flowchart (at 930). If, however, the computer 100 (at 912) determines that *isContinue* is true and that i is less than *size* ("Y" in the illustrated flowchart), then the computer 100 (at 914) adds the lengths of the route segment at index i in the *ListofSketchSegments2D* to *travelLength.* Next, the computer 100 (at 916) determines whether the *travelLength* is greater than the *newLength3D.* If the computer 100 (at 916) determines that the *travelLength* is not greater than the *newLength3D* ("N" in the illustrated flowchart), then the computer 100 (at 918) adds the sketch segment into *arrayOfNewSketchSegment,* increments the value of i, and returns to step 912 in the illustrated flowchart. If the computer 100 (at 916) determines that the *travelLength* is greater than the *newLength3D* ("Y" in the illustrated flowchart), then the computer 100 (at 920) subtracts the *newLength3D* from the *travelLength* and stored the result as *splitAtLength.* Specifically, the computer100 (at 920) computes *splitAtLength* = *travelLength - newLength3D.*

Next (at 922), the computer 100 finds a corresponding point location on the sketch segment at *splitAtLength.* Additionally, the computer 100 (at 922) uses a split route command (and function) to split the sketch segment at the point location. Also (at 922), the computer 100 adds *sketchSegment* into *arrayofNewSketchSegment.* Moreover, the computer 100 (at 922) removes *arrayOfNewSketchSegment* from *m_ListofSketchSegments2D.* Additionally, the computer 100 (at 922) adds the created new split entity at start of *m_ListojSketchSegments2D.*

Then, the computer 100 (at 924) checks whether the variable i is equal to zero. If the computer 100 (at 924) determines that the variable i is equal to zero ("Y" in the illustrated flowchart), then the computer 100 (at 926) updates arrayofNewSketchSegment and newLength to routeSegment2D data. Then, the computer 100 returns to step 908 in the illustrated flowchart, increments the value in variable i and the process continues accordingly. If, however, the computer 100 (at 924) determines that the variable i is not equal to zero ("N" in the illustrated flowchart), then the computer 100 (at 926) creates a new object for the route segment having an ID equal to arrayOfSplitData[i]. As noted, this is generally the route segment created newly in the three-dimensional modeling environment. After that, the process represented in the illustrated flowchart ends (at 930).

### Multiple Route segments Merging into One Route Segment:

The computer 100 is configured to enable a designer to merge multiple route segments in a three-dimensional model of a wiring harness into one route segment. There are a variety of ways in which this may be accomplished. In one example, the computer 100 may be executing the SOLIDWORKS^{®} computer program, with its electrical Routing^{™} add-ins, which presents to the designer a "Merge Routes" command, the selection of which by the designer, merges existing route segment in the model into one route segment.

In that situation (e.g., where a designer has merged multiple route segments into one), the computer 100, when creating a flattened two dimensional version of the model, is configured to accommodate and accurately reflect the merge while maintaining layout characteristics (including any prior edits to the layout characteristics) of a prior flattened two-dimensional version of the model (that did not include the newly added split). Specifically, in a typical implementation, the computer 100 uses the *m_RouteSegment3D_*c data structure and the *m_RouteSegment2D_*c data structure to identify the route segments that may have been merged and that should be shown as merged in the flattened version of the model displayed after executing the flattening functionality. As an example, any such changed route segments may be identified by the computer 100 implementing the processes set forth in the FIG. 6 flowchart (discussed above).

In a typical implementation, therefore, if a user (designer) deletes a junction point/split point in a 3D Route then two route segments are converted into one route segment. This conversion process is called a merge route operation. Two sketch segments having same geometry type are combined into single sketch segment during a merge process. Typically, the *m_RouteSegment3D_c* data structure and the *m_RouteSegment2D_c* data structure are used to identify the route segment created after the merge route operation. (See, e.g., FIG. 6.) Changed route segments are searched for in / derived from the *m_RouteSegment3D_c* and the *m_RouteSegment2D_c* data. In a typical implementation of this algorithm, *routeSegments2D's* are traced to search *routeSegment3D's* end points.

Unless otherwise indicated, the following terminology from FIG. 8, as used herein with respect to the merge route functionality, refers to the following. The term *routeSegment3D* refers to a route segment from a *m_RouteSegment3D_c* data structure, the term *routeSegment2D* refers to a route segment from a *m_RouteSegment2D_c* data structure, the term *new3DStartPoint* refers to a start point extracted from *routeSegment3D,* the term *new3DEndPoint* refers to an end point extracted from *routeSegment3D,* the term *old3DStartPoint* refers to an old 3D start point stored in *routeSegment2D,* the term *old3DEndPoint* refers to an old 3D end point stored in *routeSegment2D,* the term *matchPoint* refers to either the *new3DStartPoint* or the *new3DEndPoint* of *routeSegment3D* not present in *routeSegment2D,* the term *tracePoint* refers to either the *old3DStartPoint* or the *old3DEndPoint* of *routeSegment2D* not present in *routeSegment3D,* and the term *newLength3D* refers to a value of *m_RouteSegmentLength3D* for *routeSegment3D.*

Table 5 shows exemplary data that may be stored (e.g., in computer memory) in logical association with route segment(s) in a model. More specifically, the table shows data structures that may be stored for a three-dimensional model (routeSegment3D) after a route merge in the model and for a corresponding flattened two-dimensional version of the model (routeSegment2D) that would have existed prior to the route segments being merged.

**Table 5**

| **routeSegment3D (New Data) After merge Route** | | | **routeSegment2D(Old Data) before merge** | | | | |
|---|---|---|---|---|---|---|---|
| m_RouteSegmentID | 1 | 2 | m_RouteSegmentID | 1 | 3 | 2 | 4 |
| m_RouteSegmentLength3D(mm) | 285 | 250 | m_RouteSegmentLength2D | 150 | 135 | 120 | 130 |
| m_StartPoint3DIndex | 10 | 10 | m_StartPointIndex3D | 10 | 50 | 10 | 60 |
| m_EndPoint3DIndex | 20 | 30 | m_EndPointIndex3D | 50 | 20 | 60 | 30 |
| m_ListofSketchSegments3D | 1, 3 | 4, 6 | m_StartPoint2DIndex | 100 | 160 | 100 | 180 |
| | | | m_EndPoint2DIndex | 160 | 120 | 180 | 140 |
| | | | m_ListofSketchSegments2D | 1,2,3 | 21, 4,5,6, 7,8,9,10,11 | 12,13,14 | 22, 15,16, 17,18,19,20 |

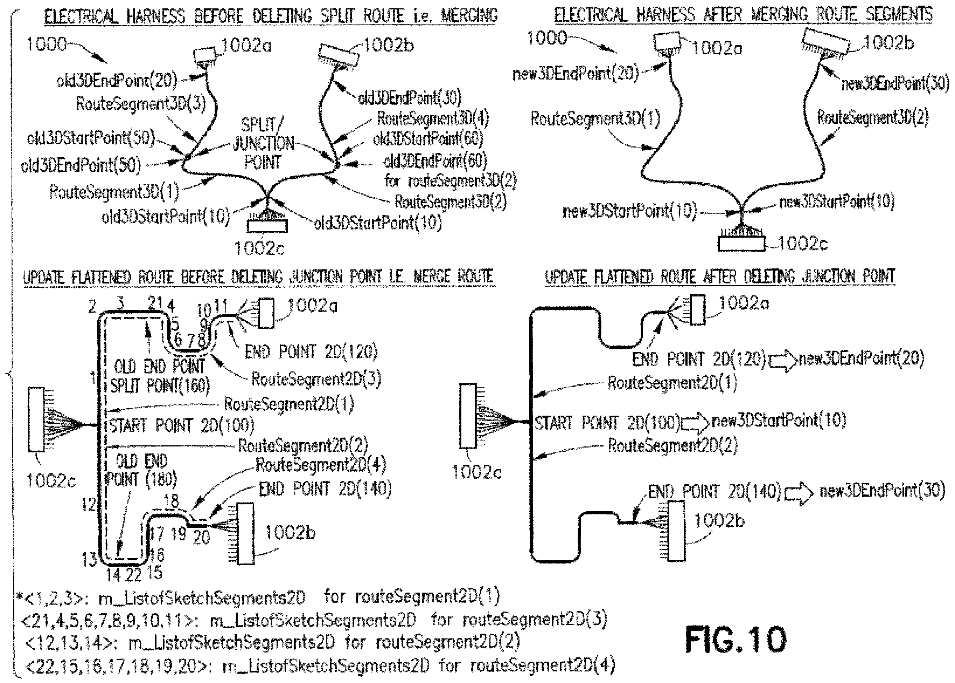

FIG. 10 shows an initial image of a three-dimensional model 1000 in a three-dimensional modeling environment (labeled *Electrical Harness before deleting Split point i.e., merging*), *a* flattened two-dimensional version of the three-dimensional model (labeled *Update Flattened route before deleting junction point i.e., merge route*), a subsequent image of the three-dimensional model 1000 in the three-dimensional modeling environment and with a each of two route segments having been merged (labeled *Electrical Harness after merging route segments*), and a subsequent flattened two-dimensional version of the three-dimensional model with the added split / junction point (labeled *Update flattened route after deleting junction point*). This is an example of a sequence of images that the computer 100 may display to a designer onscreen and in the order just described as the model evolves (when the designer merges a model's route segments). Of note is the fact that although the model is changed in the three-dimensional modeling environment (by merging the model's route segments), integrating those changes into a flattened two-dimensional version of the model do not significantly disrupt the visual layout of the flattened two-dimensional version of the model relative to its prior iteration. The images in FIG. 10 correspond to the information represented in Table 5.

In FIG. 10, it can be seen that, aside from the routes segments having been merged, the flattened two-dimensional version of the model in the *Update flattened route after deleting junction point* image shares the same visual layout characteristics as the flattened two-dimensional version of the model in the previous iteration of the two-dimensional (i.e., the version before the merging, *Update Flattened route before deleting junction point i.e., merge route* image). For example, in both images, the connectors are configured along lines that are parallel to one another, the central connector 1002c is positioned on one side of the image with the other two connectors 1002a, 1002b positioned on the other side of the image, the major portions of the beginnings of each connecting route segment follows a straight line (either up or down) from a junction point, with a rounded 90 degree bends at the end of that straight line, followed by a straight horizontal portion, followed by another rounded 90 degree bend toward the opposite route segment, followed by a short straight portion, followed by another rounded 90 degree bend, followed by another short straight portion, followed by an outward rounded 90 degree bend, followed by a very short portion, to another bend and a short portion that connects to a junction point for a corresponding one of the connectors 1002a, 1002b. The fan out to connector 1002c extends to the left to the connection points on connector 1002c, and the fan outs to each of the other connectors 1002a, 1002b extend to the right to the connection points on the corresponding connector 1002a or 1002b. Notably, these visual layout characteristics affect how the model appears (e.g., on screen) on a single two dimensional plane, but does not affect the design details of the model itself. Other visual layout characteristics may contribute to a desired appearance (e.g., neat, orderly, and intuitive / easy-to-understand) of the flattened two-dimensional version of the model. In shifting from the *Update Flattened route before deleting junction point i.e., merge route* image to the *Update flattened route after deleting junction point* image, the computer 100 incorporates the latest change to model (i.e., the route segment merges), but maintains the visual layout characteristics from the prior *Update Flattened route before deleting junction point i.e., merge route* image, despite the incorporated design change. In this manner, the visual layout characteristics are preserved from one iteration of the flattened two-dimensional version of the model to the next, despite the design changes having been made during an interim three-dimensional modeling session. In a typical implementation, the computer 100 is configured to store information detailing the visual layout characteristics of the flattened two-dimensional version of a model.

The design changes made in the virtual three-dimensional modeling environment (merging the route segments) results in a change the visual layout of the three-dimensional model being displayed by the computer 100 and typically causes the computer 100 to update *m_RouteSegmentData3D_c* for any affected route segments. Specifically, for each merged route segment that existed in *m_RouteSegmentData3D_c*, the computer 100 deletes one of the merged route segments and lengthens the surviving route segment, changes either the three-dimensional starting point index (*m_StartPoint3Dindex*) or the three-dimensional end point index (*m_EndPoint3Dindex)* that existed in *m_RouteSegmentData3D_c* prior to merge, and changes the three-dimensional list of sketch segments (*m_ListofSketchSegments3D* that existed in *m_RouteSegmentData3D_*c) to reflect the changes being made to accommodate the merge.

In the example represented in Table 4, previous route segments having IDs 1 & 3 are merged into new route segment 1 and previous route segments having IDs 2 & 4 are merged into route segment 2 after deleting junction points in 3D Route (to merge). Let us consider the merge route case for route segment ID 1. The *routeSegment3D* (ID = 1) is a changed route segment in 3D Route. The *routeSegment3D* (ID=1) has a *new3DStartPoint* and *new3DEndPoint* ID as 10 and 20 respectively while old route segment (i.e., *routeSegment2D* (ID = 1)) has an *old3DStartPoint* and *old3DEndPoint* as 10 and 50. In this case *new3DStartPoint* and *old3DEndPoint* is same in both data structures (*routeSegment3D* and *routeSegment2D*). In this case, *old3DEndPoint*(50) is designated by the computer 100 as the *tracePoint* and the *new3DEndPoint*(20) is designated by the computer 100 as the *matchPoint.*

The computer 100, typically, uses routeSegment2D data to trace connecting route segments. In a typical implementation, tracing of the routeSegment2D data continues until the computer 100 identified the matchPoint i.e., 20. Route segments traversed by the computer 100 utilizing this tracing algorithm to find the matchPoint are added into an *arrayOfmergeData* container. The *arrayOfMergeData* container stores information {1,3}. The first element inside *arrayOfMergeData* typically is the changed route segment while other elements are any deleted route segments due to the merging of route segments. This data is added into *arrayOfMergeRouteSegmentData* in the form of a map of {1,{1,3}}. A key in this map typically is the first element of *arrayOfMergeData.*

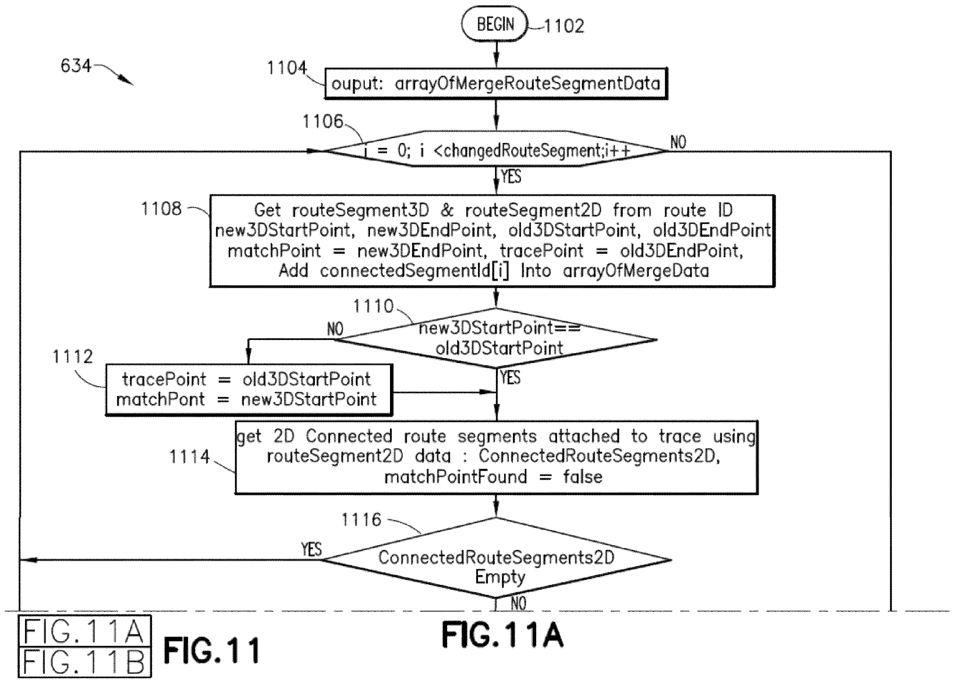

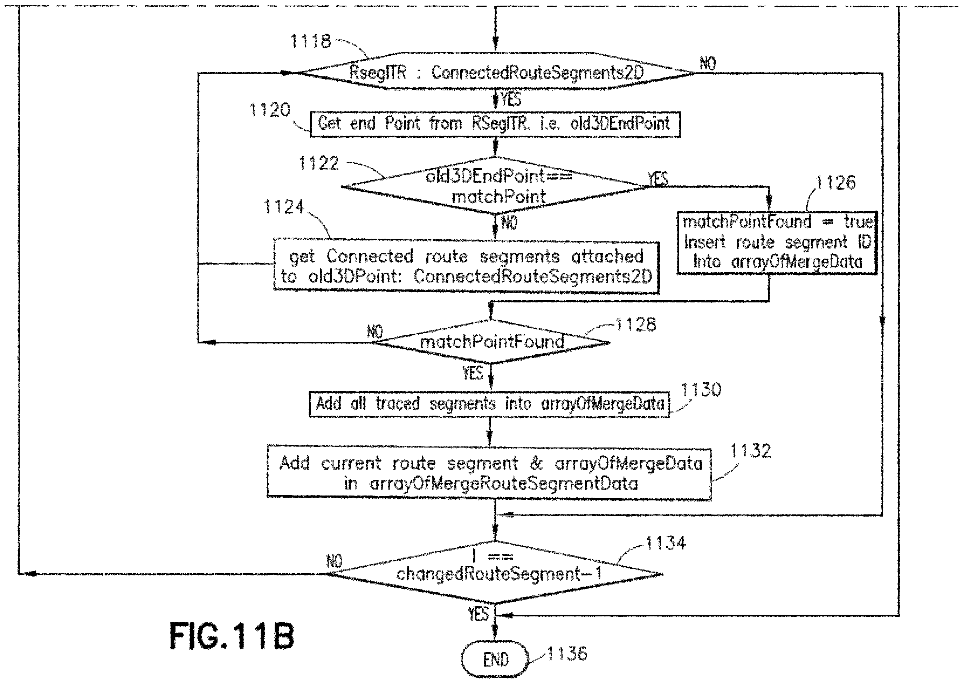

The flowchart in FIG. 11 provides an exemplary more detailed representation of these functionalities.

The process represented in the FIG. 11 flowchart begins (at 1102) and the computer 100 (at 1104) executes an *outarrayofMergeRouteSegmentData* function, which, in a typical implementation, takes route segments that have been merged (to produce a single new longer route segment) and produces as an output an array with data (e.g., the data in Table 4) associated with the merger. The processing at step (802 and 804) may be triggered, for example, if/when route segments have been merged. This may happen, for example, if the computer 100 (at 632) determines that either the 3D start points or the 3D end points are different in the 3D data structure and the 2D data structure.

Next (at 1106), the computer 100 enters an iterative functional loop. The loop, as indicated at 1106, is initialized with i, a variable stored in memory, having an initial value of zero (i = 0). The value assigned to i is increased by one (i++) after each loop. The loop is iterated for as long as the value of i is less than the number of unprocessed changed route segments (e.g., i *< ChangedRouteSegment,* where *ChangedRouteSegments* is a count of unprocessed changed route segments) in the three-dimensional wiring harness model. The loop is executed once per such route segment. So, in a typical implementation, with this functional loop (that the computer 100 enters at 1106), the computer 100 processes each changed three-dimensional route segment one at a time.

According to the illustrated functional loop, for each changed three-dimensional route segment, the computer 100 (at 1108) gets (e.g., from computer memory) a variety of route data for the associated route segment(s). Specifically, the computer 100, according to the illustrated flowchart, gets the *m_RouteSegment3D_*and *mRouteSegment2D* for the route ID. The computer 100 gets the *new3DStartPoint,* the *new3DEndPoint,* the *old3DStartPoint,* and the *old3DEndPoint.* The computer 100 gets the *matchpoint* (which may, under certain circumstances, equal the *new3DEndPoint*), the *tracePoint* (which may, under certain circumstances, equal the *old3DEndPoint*). The flowchart indicates that the computer 100 also adds *connectedSegmentId(i),* i.e., a route segment identifier for any connected route segment connected to the route segment at issue. This information, according to the illustrated flowchart is placed into an array (i.e., *arrayofMergeData*).

Next (at 1110), the computer 100 determines whether the *new3DStartPoint* (in the model data structure) is equal to the *old3DStartPoint* (in the flattened model data structure). If the computer 100 (at 1110) determines that the *new3DStartPoint* (in the model data structure) is not equal to the *old3DStartPoint* (in the flattened model data structure) ("N" in the illustrated flowchart), then the computer 100 (at 1112) sets the *old3DStartPoint* as the *tracePoint* and sets the *new3DStartPoint* as the *matchPoint.* If the computer 100 (at 1110) determines that the *new3DStartPoint* (in the model data structure) is equal to the *old3DStartPoint* (in the flattened model data structure) ("Y" in the illustrated flowchart), then the computer 100 does not set the *new3DStartPoint* as the *matchPoint* and does not set the *old3DStartPoint* as the *tracePoint.*

Next, the computer 100 (at 1114) gets 2D connected route segments attached to the trace using routeSegment2D data. According to the illustrated flowchart, these connected route segments are stored in *ConnectedRouteSegment.* The computer 100 (also at 1114) sets *matchpointfound* to *false,* where the value of false indicates that the computer 100 has not yet found the *matchPoint* among any data considered.

The computer 100 (at 1116) checks whether the *ConnectedRouteSegments2D* dataset is empty. If the computer 100 (at 1116) determines that the *ConnectedRouteSegments2D* dataset is empty ("Y" in the illustrated flowchart), then the computer 100 continues the process by returning to step 1106 in the illustrated flowchart. The value for "i" is incremented at 1106 and the process continues accordingly. If the computer 100 (at 1116) determines that the *ConnectedRouteSegments* dataset is not empty ("N" in the illustrated flowchart), then the computer 100 continues the process by proceeding to establish (at 1118) a range-based for loop and designating the container, *ConnectedRouteSegments2D,* and setting a loop variable *RSegITR* that, holds one element from *ConnectedRouteSegments2D* each time through the loop. Thus, the computer 100, in a typical implementation, loops over each element in *ConnectedRouteSegments2D,* assigning it to *RsegITR.* Next (at 1120), the computer 100 gets the end point from *RsegITR* (*i.e., the old3DEndPoint*).

The computer 100 then (at 1122) checks whether the *old3DEndPoint* equals the *matchPoint.* If the computer 100 (at 1122) determines that the *old3DEndPoint* does not equals the *matchPoint* ("N" in the illustrated flowchart), then the computer 100 (at 1124) gets the connected route segments attached to *old3DEndPoint* and adds them to *ConnectedRouteSegments2D.* Next, the computer 100 returns to step 1118 in the illustrated flowchart to process the next element in *ConnectedRouteSegments2D.*

If the computer 100 (at 1122) determines that the *old3DEndPoint* equals the *matchPoint* ("Y" in the illustrated flowchart), then the computer 100 (at 1126) changes *matchPointFound* to *true* (indicating that the match point has been found), and inserts the route segment ID into *arrayofMergeData.* The computer 100 (at 1130) adds all traced route segments into *arrayofMergeData.* Then, the computer 100 (at 1132) adds the current route segment and *arrayOfMergeData* into *arrayofMergeRouteSegmentData.* Next (at 1134), the computer 100 determines whether i==*changedRouteSegment*-1*.* If the computer 100 (at 1134) determines that i==*changedRouteSegment*-1, then the computer 100 ends the process indicated in the FIG. 11 flowchart (at 1136). Otherwise, the computer 100 returns to step 1106 in the flowchart.

If the computer 100 (at 1128) concludes that *matchPoint* has not been found ("N" in the illustrated flowchart), the computer 100 proceeds back to step 1118 to continue the process, taking into account the next route segment in *ConnectedRouteSegments2D,* and continuing the process accordingly.

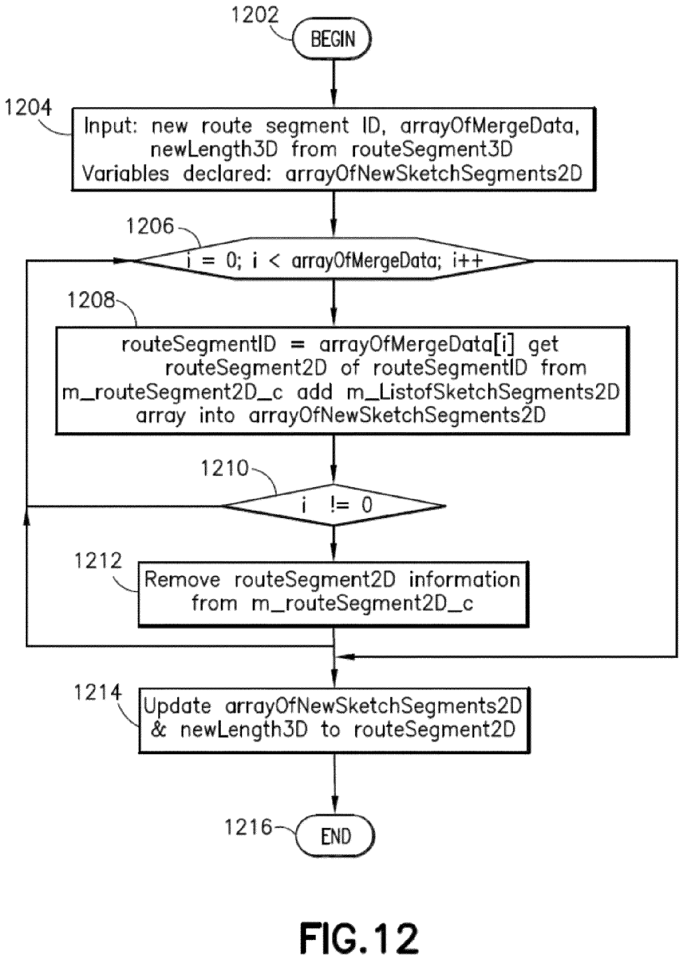

Next, the computer 100 executes functionalities to merge any identified sketch segments in the flattened route version of the model. This is represented in the flowchart of FIG. 12, which is discussed below. At a high level, however, this process may involve the computer 100 iterating over the *arrayOfMergeData* container. In a typical implementation, the computer 100 extracts *m_ListofSketchSegments2D* from the routeSegment2D data for all route segments present in *arrayOfMergeData* and fills that into *arrayOfNewSketchSegments2D.* Additionally, the computer 100 updates *arrayOfNewSketchSegments2D* and *newLength3D* into the *m_routeSegment2D_c* data struture for the changed routed route segment ID. The computer 100 removes deleted route segment data removed from *m_routeSegment2D*_*c.* This process is typically repeated for all entries in *arrayOfMergeData.* In an exemplary implementation, the computer 100, executing an algorithm along these lines, creates new data for the merged route segment as indicated in Table 6.

**Table 6**

| m_RouteSegmentID | m_RouteSegment Leneth2D | m_StartPoint2D Index | m_EndPoint2D Index | m_StartPointI ndex3D | m_EndPoint Index3D | m_ListofSketchSegments2D |
|---|---|---|---|---|---|---|
| 1 | 285 | 100 | 120 | 10 | 20 | 1,2,3,21,4,5,6,7,8,9,10,11 |
| 2 | 250 | 100 | 140 | 10 | 30 | 12,13,14,22,15,16,17,18,19,20 |

Turning now to the flowchart of FIG. 12, which details a particular implementation of the foregoing computer-implemented process for merging sketch segments in a flattened route version of a model.

The process begins (at 1202) and the computer 100 (at 1204) inputs a new route segment ID, information from *arrayOfSplitData,* and a *newLength3D* from *routeSegment3D.* The computer 100 (also at 1204) declares variables *arraysOfNewSketchSegments2D.*

Next (at 1208), the computer 100 enters an iterative functional loop. The loop is initialized (at 1208) with i, a variable stored in memory, having an initial value of zero (i = 0). The value assigned to i is increased by one (i++) after each loop. The loop is iterated for as long as the value of i is less than the number of unprocessed split routes in *arrayOfMergeData* (e.g., i *< arrayOfMergeData,* where *arrayOfMergeData* may be a count of unprocessed merge route segments) identified by the computer 100. The loop may be executed once per such route segment. So, in a typical implementation, with this functional loop (that the computer 100 enters at 1206), the computer 100 processes each split route segment one at a time.

Next, the computer 100 (at 1208) sets *routeSegmentID* equal to *arrayofMergeData[i].* The computer 100 gets *routeSegment2D* of *routeSegmentID* from *m_routeSegment2D*_*c.* The computer 100 adds the *m_ListofSketchSegment2D* array into the *arrayOfNewSketchSegments2D.* Then, the computer 100 (at 1210) checks to see whether the variable i is not equal to zero. If the computer 100 determines (at 1210) that the variable i is not equal to zero ("Y" in the illustrated flowchart), then the computer 100 returns to step 1206 where it increments i and continues the process accordingly. If the computer 100 determines (at 1210) that the variable i is equal to zero ("N" in the illustrated flowchart), then the computer 100 (at 1212) removes *routeSegment2D* information from *m_routeSegment2D_c.* The computer 100 may then return to step 1206 where it increments i and continues the process accordingly. If there are no more route segments to process (e.g., at 1206), then the computer 100 (at 1214) updates the *arrayOfNewSketchSegments2D* and *newLength3D* to *routeSegment2D.* The visual depiction in the Update flattened route after deleting junction point image in FIG. 10, for example, may be displayed onscreen by the computer 100 utilizing this version of *routeSegment2D.*

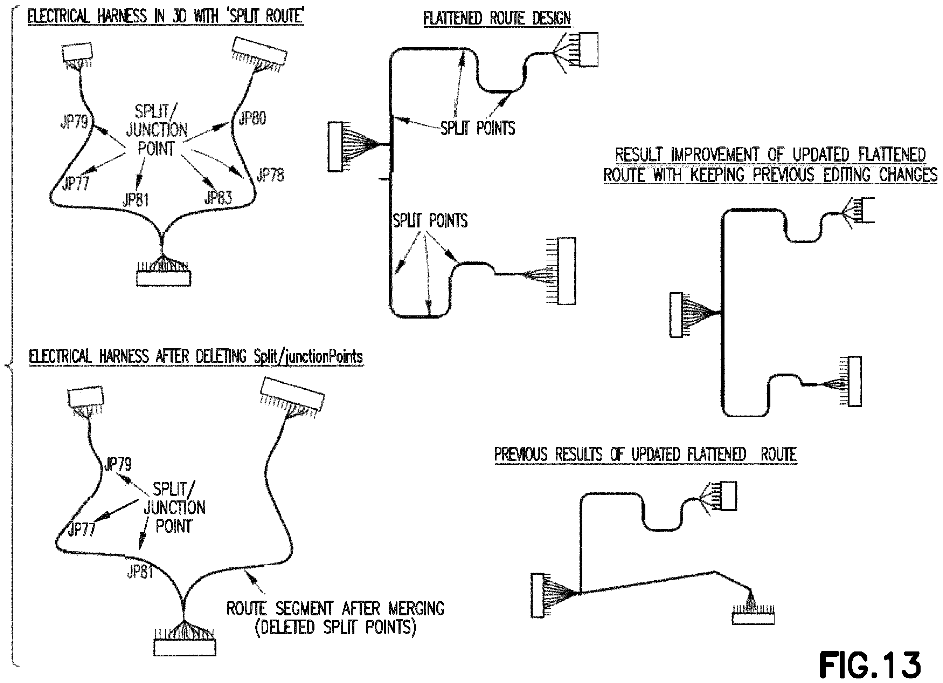

FIG. 13 shows an example of a series of images with varying images that represent a relatively simple electrical wiring harness at different stages in the design process. The first stage (shown in the *Electrical Harness in 3D with 'Split Route'* image) shows a three-dimensional model of the wiring harness with split routes labeled as such in a virtual three-dimensional modeling environment. The second stage (shown in the *Flattened Route Design* image) shows a flattened, two-dimensional visual representation of the model (perhaps after several editing steps) in a virtual two-dimensional viewing environment. The third stage (shown in the *Electrical Harness in 3D after deleting split* / *junctionPoints* image) shows a modified version of the three-dimensional model in the virtual three-dimensional modeling environment with modifications that include a merger (deleting split points) in the wiring harness in the model. These modifications to the underlying design itself are made in the three-dimensional modeling environment. **In** a typical implementation, the changes represented in the third stage (shown in the *Electrical Harness in 3D after deleting split* / *junctionPoints* image ) would take place after the viewing and visual layout edits in the second stage (shown in the *Flattened Route Design* image).

The other two images in FIG. 2 (labeled *Previous Result of Updated Flattened Route* and *Result Improvement of updated flattened route with keeping previous editing changes*) show the result of a subsequent flattening procedure being applied to the third stage three-dimensional model (shown in the *Electrical Harness in 3D after deleting split* / *junctionPoints* image) using the systems and techniques disclosed herein vs. not using the systems and techniques disclosed herein. Comparing these two possible outcomes to the *Flattened Route Design* image reveals that the visual layout of the *Result Improvement of updated flattened route with keeping previous editing changes* image is significantly more similar in visual layout to the *Flattened Route Design* image than the *Previous Result of Updated Flattened Route* image. It is clear that, if the computer produces the *Previous Result of Updated Flattened Route* image, the designer will want to, and most likely will decide to take additional steps to edit its visual layout to make its visual layout more similar to its prior layout (in the *Flattened Route Design* image. These additional steps may be avoided by the computer implementing the modified approach disclosed herein that produces the visual layout shown in the *Result Improvement of updated flattened route with keeping previous editing changes* image. That image, aside from representing the merger accurately, has a visual layout that is virtually identical to the visual layout of the *Flattened route design* image.

A number of embodiments of the invention have been described. Nevertheless, it will be understood that various modifications may be made without departing from the spirit and scope of the invention.

For example, the systems and techniques disclosed herein have been described as being applied to the design of wiring harnesses (e.g., electrical wiring harnesses). However, the systems and techniques are not necessarily limited to that application. In essence, they can be applied to design, and subsequently build, any other real world object, especially ones that include physical elements (e.g., tubes, fiber optics, etc.) that may need to be routed through real-world spaces, bundled, and/or interconnected to other real world objects.

As disclosed herein, wiring harness design typically involves designing or developing a 3D model of the wiring harness in a virtual three-dimensional modeling environment. Ultimately and typically, the resulting 3D model is flattened via a computer implemented flattening functionality that flattens the model to a 2D viewing (e.g., not modeling) environment where the resulting flattened 2D version of the model appears on single plane. The flattened 2D version of the model has a visual layout that the designer may modify by interacting with one or more interface elements that the computer may make available in the 2D viewing environment. The design process may be an iterative one where multiple editing operations are needed and implemented in the 3D environment (that facilitates changes to the 3D model) and the 2D viewing environment (that facilitates changes to the 2D visual layout). In a typical implementation, the computer 100 described herein preserves visual layout information and edits to same made to previous iterations in updates of the flattened route (e.g., to incorporate model updates) to achieve the accuracy and readability for formboard drawing. Variations are possible.

The phrase computer-aided design should be construed broadly to include any computer-based software for designing, engineering, simulating, and/or flattening designs or the like.

The specific processes for accommodating a modified route segment length in generating an updated flattened two-dimensional version of a model may vary. In general, if a designer changes the length of a route segment in the three-dimensional modeling environment and initiates a process (e.g., switch the configuration) whereby the computer 100 will generate an updated version of a prior flattened two-dimensional version of a model, then the computer 100 typically identifies the changed route segment by comparing the *m_routeSegment3D_*c data structure to the *m_routeSegment2D_*c data structure. Variations, however, are possible.

In various implementations, one or more computer components disclosed herein (e.g., applications, design tools, flattening tools, etc.) can be implemented by one or more computer-based processors (referred to herein as processor) executing computer-readable instructions stored on non-transitory computer-readable medium to perform the associated computer-based functionalities. The one or more computer-based processors can be virtually any kind of computer-based processors and can be contained in one housing or distributed at different locations, and the non-transitory computer-readable medium can be or include any one or more of a variety of different computer-based hardware memory / storage devices either contained in one housing or distributed at different locations.

Certain functionalities are described herein as being accessible or activated by a user selecting an onscreen button or the like. This should be construed broadly to include any kind of visible, user-selectable element or other user interactive element (or combinations thereof).

The systems and techniques disclosed herein can be implemented in a number of different ways. In one exemplary implementation, the systems and techniques disclosed herein may be incorporated into the Solidworks^{®} computer program available from Dassault Systèmes, the applicant of the current application. In various implementations, the systems and techniques can be deployed otherwise.

It should be understood that the example embodiments described herein may be implemented in many different ways. In some instances, the various methods and machines described herein may each be implemented by a physical, virtual, or hybrid general purpose computer, such as a computer system, or a computer network environment, such as those described herein. The computer / system may be transformed into the machines that execute the methods described herein, for example, by loading software instructions into either memory or non-volatile storage for execution by the CPU. One of ordinary skill in the art should understand that the computer / system and its various components may be configured to carry out any embodiments or combination of embodiments of the present invention described herein. Further, the system may implement the various embodiments described herein utilizing any combination of hardware, software, and firmware modules operatively coupled, internally, or externally, to or incorporated into the computer / system.

Various aspects of the subject matter disclosed herein can be implemented in digital electronic circuitry, or in computer-based software, firmware, or hardware, including the structures disclosed in this specification and/or their structural equivalents, and/or in combinations thereof. In some embodiments, the subject matter disclosed herein can be implemented in one or more computer programs, that is, one or more modules of computer program instructions, encoded on computer storage medium for execution by, or to control the operation of, one or more data processing apparatuses (e.g., processors). Alternatively, or additionally, the program instructions can be encoded on an artificially generated propagated signal, for example, a machine-generated electrical, optical, or electromagnetic signal that is generated to encode information for transmission to suitable receiver apparatus for execution by a data processing apparatus. A computer storage medium can be, or can be included within, a computer-readable storage device, a computer-readable storage substrate, a random or serial access memory array or device, or a combination thereof. While a computer storage medium should not be considered to be solely a propagated signal, a computer storage medium may be a source or destination of computer program instructions encoded in an artificially generated propagated signal. The computer storage medium can also be, or be included in, one or more separate physical components or media, for example, multiple CDs, computer disks, and/or other storage devices.

Certain operations described in this specification (e.g., aspects of those represented in the flowcharts, and otherwise disclosed herein) can be implemented as operations performed by a data processing apparatus (e.g., a processor / specially programmed processor / computer) on data stored on one or more computer-readable storage devices or received from other sources, such as the computer system and/or network environment described herein. The term "processor" (or the like) encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, for example, code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing, and grid computing infrastructures.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations may be described herein as occurring in a particular order or manner, this should not be understood as requiring that such operations be performed in the particular order shown or in sequential order, or that all illustrated operations be performed, to achieve desirable results. **In** certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Other implementations are within the scope of the claims.

## Claims

1. A computer-based method comprising:
generating, in a virtual two-dimensional viewing environment, a flattened, two-dimensional visual representation of an initial three-dimensional model of a wiring harness, wherein the flattened, two-dimensional representation of the initial three-dimensional model has an initial visual layout in the virtual two-dimensional viewing environment;
subsequently modifying the initial three-dimensional model in a virtual three-dimensional modeling environment to generate a modified three-dimensional model, wherein modifying the initial three-dimensional model comprises:
splitting a route segment in the initial three-dimensional model to produce a split route segment with two route subsegments in the modified three-dimensional model, or
merging two connected route segments in the initial three-dimensional model to produce a single merged route segment in the modified three-dimensional model; and
generating, in the virtual two-dimensional viewing environment, a flattened, two-dimensional visual representation of the modified three-dimensional model, wherein the flattened two-dimensional visual representation of the modified three-dimensional model visually represents either the split route segment with the two route subsegments or the single merged route segment, and otherwise has the visual layout of the flattened, two-dimensional representation of the initial three-dimensional model.

2. The computer-based method of claim 1, wherein generating the flattened, two-visual dimensional representation of the initial three-dimensional model of the wiring harness comprises:
generating, in the virtual three-dimensional modeling environment, the initial three-dimensional model of the wiring harness;
flattening the initial three-dimensional model of the wiring harness to produce a flattened version of the three-dimensional model having a default visual layout; and
editing the default visual layout to produce the flattened, two-visual dimensional representation of an initial three-dimensional model of a wiring harness having the initial layout.

3. The computer-based method of claim 1 or 2, further comprising:
storing, in computer memory, a model data structure logically associated with each respective one of the three-dimensional route segments represented in a model, wherein the model data structure identifies a route segment identifier, a three-dimensional route segment length, a three-dimensional route segment start point, a three-dimensional route segment end point, and list of three-dimensional sketch segments that make up the route segment; and
storing, in the computer memory, a flattened route data structure logically associated with each respective one of the two-dimensional route segments represented in a flattened, two-dimensional visual representation of a model, wherein the flattened route data structure identifies the route segment identifier of a corresponding route segment from a corresponding model, a flattened route segment length, a two-dimensional route segment start point, a two-dimensional route segment end point, a three-dimensional route segment start point for the corresponding route segment from the corresponding model, a three-dimensional route segment end point for the corresponding route segment from the corresponding model, and list of two-dimensional sketch segments that make up the two-dimensional route segment.

4. The computer-based method of any one of claims 1 to 3, further comprising:
updating the model data structure after modifying the initial three-dimensional model in a virtual three-dimensional modeling environment to generate the modified three-dimensional model but before generating, in the virtual two-dimensional viewing environment, the flattened, two-dimensional visual representation of the modified three-dimensional model.

5. The computer-based method of claim 4, wherein generating the flattened, two-dimensional visual representation of the modified three-dimensional model comprises:
comparing the updated model data structure to the flattened route data structure to identify a changed route segment in the modified three-dimensional model, wherein the changed route segment in the modified three-dimensional model is different than a corresponding one of the route segments in the flattened, two-dimensional visual representation of the initial three-dimensional model; and
subsequently updating the flattened route data structure to produce an updated flatten route data structure that reflects the route segment change identified in the comparison.

6. The computer-based method of claim 5, wherein the flattened, two-dimensional visual representation of the modified three-dimensional model is generated based on the updated flatten route data structure.

7. The computer-based method of claim 5, wherein the modifying of the initial three-dimensional model comprises splitting the route segment, the method further comprising:
designating, in computer memory, a trace point and a match point from the changed route segment;
tracing a route segment that is connected to the changed route segment from the trace point to the match point; and
in response to reaching the match point, adding the traced route segment into a first array stored in computer memory, such that the first array stores the changed route segment and the traced route segment.

8. The computer-based method of claim 7, wherein:
the trace point is whichever of the three-dimensional route segment start point from the model data structure or the three-dimensional route segment end point from the model data structure is not present in the flattened route data structure; and
the match point is whichever of the three-dimensional route segment start point from the flatten route data structure or the three-dimensional route segment end point from the flatten route data structure is not present in the model data structure.

9. The computer-based method of claim 8, further comprising:
for each route segment in the first array, extracting the associated list of two-dimensional sketch segments that make up the two-dimensional route segment from the flattened route data structure;
iterating over the extracted list and, at each iteration, adding a sketch segment length for a corresponding one of the sketch segments, to a travel length variable; and
terminating the iterating if the travel length variable is equal to or greater than the three-dimensional route segment length from the model data structure.

10. The computer-based method of claim 9, further comprising:
after terminating the iterating, computing a distance between the travel length variable and the three-dimensional route segment length from the model data structure; and
splitting a last sketch segment whose sketch segment length was added to the travel length variable at a point along the last sketch segment that is the computed distance from an end of the last sketch segment.

11. The computer-based method of claim 10, further comprising:
displaying, in the flattened, two-dimensional visual representation of the modified three-dimensional model, a new split at the point along the last sketch segment.

12. The computer-based method of claim 5, wherein the modifying of the initial three-dimensional model comprises merging the two connected route segments, the method further comprising:
designating, in computer memory, a trace point and a match point from the changed route segment;
tracing from the trace point to the match point based on the flattened route data structure; and
in response to reaching the match point, adding any traced route segments into a second array stored in computer memory, such that the second array stores the changed route segment and any traced route segments, wherein the traced route segments in the second array are route segments to be excluded from the flattened, two-dimensional visual representation of the modified three-dimensional model.

13. The computer-based method of claim 12, wherein:
the trace point is designated as whichever of the three-dimensional route segment start point from the flatten route data structure and the three-dimensional route segment end point from the flatten route data structure is not present in the model data structure; and
the match point is designated as whichever of the three-dimensional route segment start point from the model data structure or the three-dimensional route segment end point from the model data structure is not present in the flatten route data structure.

14. The computer-based method of claim 13, further comprising:
for each route segment in the second array, extracting the associated list of two-dimensional sketch segments that make up the two-dimensional route segment from the flattened route data structure;
updating the flatten route data structure to include the list of two-dimensional sketch segments extracted from the flattened route data structure, and to include three-dimensional route segment length from the model data structure, and to remove the route segments to be excluded from the flattened, two-dimensional visual representation of the modified three-dimensional model.

15. The computer-based method of claim 10, further comprising:
displaying, in the flattened, two-dimensional visual representation of the modified three-dimensional model, a merged route segment in accordance with the updating of the flatten route data structure.

16. The computer-based method of any one of claims 1 to 15, further comprising:
manufacturing a real world version of the wiring harness in the modified three-dimensional model based on the flattened, two-dimensional visual representation of the modified three-dimensional model.

17. A computer program comprising instructions which, when the program is executed by a computer, cause the computer to carry out the method of any one of claims 1 to 16.

18. A system comprising:
a computer comprising:
a computer processor; and
computer-based memory operatively coupled to the computer processor, wherein the computer-based memory stores computer-readable instructions that, when executed by the computer processor, cause the computer system to perform the method of any one of claims 1 to 16.
